(19) Europäisches Patentamt
European Patent Office
Office européen des brevets

(11) EP 3 277 731 B1

(12) EUROPEAN PATENT SPECIFICATION

(45) Date of publication and mention of the grant of the patent:
**07.12.2022 Bulletin 2022/49**

(21) Application number: **16773903.6**

(22) Date of filing: **28.03.2016**

(51) International Patent Classification (IPC):
***C08F 218/02*** ^(2006.01) ***C09D 129/04*** ^(2006.01)

(52) Cooperative Patent Classification (CPC):
(C-Sets available)
**C08F 4/04; C08F 216/06; C08F 218/08; C08F 218/12; C09D 129/04** (Cont.)

(86) International application number:
**PCT/US2016/024444**

(87) International publication number:
**WO 2016/160664 (06.10.2016 Gazette 2016/40)**

(54) **SOLUTION COMPRISING COPOLYMERS BASED ON POLYVINYL ALCOHOLS AND A SOLVENT MIXTURE COMPRISING WATER AND 50 WT% TO 95 WT% LOWER ALCOHOLS**

LÖSUNG, BESTEHEND AUS COPOLYMEREN AUF DER BASIS VON POLYVINYLALKOHOLEN UND EINEM LÖSUNGSMITTELGEMISCH, DAS WASSER UND 50 GEW.-% BIS 95 GEW.-% NIEDERE ALKOHOLE ENTHÄLT

SOLUTION COMPRENANT DES COPOLYMÈRES À BASE D'ALCOOLS POLYVINYLIQUES ET UN MÉLANGE DE SOLVANTS COMPRENANT DE L'EAU ET 50 % À 95 % EN POIDS D'ALCOOLS INFÉRIEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2015 US 201562141336 P**

(43) Date of publication of application:
**07.02.2018 Bulletin 2018/06**

(73) Proprietor: **Sun Chemical Corporation
Parsippany, NJ 07054 (US)**

(72) Inventor: **KHAN, Safraz
London CR2 7JL (GB)**

(74) Representative: **Carpmaels & Ransford LLP
One Southampton Row
London WC1B 5HA (GB)**

(56) References cited:

| | |
|---|---|
| **EP-A1- 3 088 430** | **DE-A1- 3 724 332** |
| **DE-B- 1 026 074** | **JP-A- H10 152 527** |
| **US-A- 3 355 412** | **US-A1- 2002 042 459** |
| **US-A1- 2002 077 416** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 218/08, C08F 218/12;**
**C08F 218/12, C08F 218/08**

**Description**

## FIELD OF THE INVENTION

The present invention is generally related to barrier coatings and barrier films that comprise copolymers and terpolymers that are soluble in aqueous solvents containing high levels of alcohol, such as greater than 50% alcohol, as a co-diluent. The copolymers and terpolymers preferably comprise at least one olefin derived from isopropenyl acetate and at least one unit derived from vinyl acetate and derivatives thereof. The copolymers and terpolymers are greater than 90% hydrolyzed. Barrier compositions prepared with the copolymers and terpolymers achieve low oxygen transmission rates, and exhibit good adhesion to substrates, good lamination bond strengths, as well as other properties desirable in barrier coatings and films.

## BACKGROUND

Many packaged foods, pharmaceuticals, cosmetics, and the like, are sensitive to moisture, atmospheric oxygen and other gases. Vapors and aromas may also contaminate the contents of packages. Synthetic plastics, such as thermoplastic plastics, are commonly used in the fabrication of food, cosmetics, and pharmaceuticals packaging, for example. The plastic packaging provides some degree of protection from oxygen and other gases, as well as moisture. However, the barrier properties of the packaging are often enhanced by coating the plastic substrate with barrier coating compositions.

A number of coating applications require volatile solvents such as isopropanol, ethanol and n-propanol to allow certain coatings processes, such as gravure and flexography, to run at speeds in excess of 100 m/min. Aqueous solutions are run at slower speeds and high drying temperatures in coating applications to ensure the coatings dry prior to the next coating application. Therefore, aqueous barrier coatings are generally not amenable to use in high speed printing processes.

Coatings comprising polyallyl and polymethylallyl alcohols have been shown to have good barrier properties. However, polallyl and polymethyallyl alcohols are not readily available, and synthesis requires the use of pyrophoric reagents and/or high pressure.

US 6,096,393 relates to a gas barrier material having superior gas barrier properties under conditions of high humidity, and possessing high clarity and melt-moldability, and also to a multilayer structure comprising a layer of said gas barrier material. The patent describes the reduction of polymethylmethacrylate and polymethacrylate type structures via a very strong reducing agent to structures possessing polymethylallyl and polyallyl alcohol. Although the final resins are soluble in alcohol, the reduction process is not amenable to scale-up due to the pyrophoric nature of the reducing agent. Conventional radical polymerization of methallyl acetate and allyl acetate is problematic due to degradative chain transfer and yields only improve under extremely high pressure.

JP19970266840 relates to a poly-isopropenyl acetate based separation membrane, it relates to a hydrophilic separation film based on saponification of poly-isopropenyl acetate and its copolymers. Polymerization is preferably performed in a reduced pressure sealed tube in solvents such as dimethyl sulfoxide. Polymers comprising isopropenyl acetate and vinyl acetate that are disclosed are not soluble in alcohols.

US 3,053,790 relates to new compositions of polyallyl and polymethallyl alcohol with a molecular weight greater than 2000. Compositions are prepared by a process in which at least 50% of the ester groups of polyacrylic and polymethacrylic esters of corresponding high molecular weights are reduced by treatment with a reducing agent. Suitable reducing agents for use in the process are lithium aluminum hydride and triisobutyl aluminum. The polymers described are not soluble in alcohol.

US 4,125,694 describes a general process for the polymerization of allyl halides by using silicic acids, silicoformic acid, or a combination of silicic acid and silicoformic acid as the catalyst and, more specifically to form polyallyl chloride, then, after alkali hydrolysis, polyallyl alcohol is formed.

WO 79/00488 relates to the preparation of poly isopropenyl esters as carboxylic acid flavorant release agents in tobacco products. Poly isopropenyl acetate and related ester compositions were prepared by polymerization of isopropenyl ester compounds. The patent describes the synthesis of poly isopropenyl acetate; yields vary from 35 - 60% over a 43 hour period at 80°C. The molecular weight measurements of poly isopropenyl acetate show a molecular weight of approximately 1000.

Nishino, J. et al (Polymer Science Part A: Polymer Chemistry, Vol. 47, 754-761, 2008) reports the high pressure polymerization of isopropenyl acetate to give poly isopropenyl acetate. Poly isopropenyl alcohol could be derived from poly isopropenyl acetate by saponification. Free radical polymerization under ambient conditions gives very low-molecular weight homopolymer of isopropenyl acetate. On the other hand, poly isopropenyl acetate with a weight average molecular weight over 104 was found to be synthesized by high-pressure radical polymerization at 1 GPa (about 9000atm).

There is still a need to develop barrier compositions that can be formulated with high levels of alcohol. Barrier

compositions containing high levels of alcohol are suitable for use in high-speed printing applications, and can also be used to form barrier films.

DE3724332 relates to the use of polyhydroxyl-containing polymers which, in addition to vinyl alcohol, also contain 1-alkylvinyl alcohol units, as sizing agents. JPH10152527 relates to a polyvinyl alcohol-based polymer capable of maintaining gas barrier properties even in high humidity by introducing a specific group into the main chain of the polymer.

## SUMMARY OF THE INVENTION

The present invention provides copolymers and terpolymers comprising vinyl acetate and isopropenyl acetate that are soluble in aqueous solvents with a high percentage of alcohol, such as greater than 50% alcohol. The copolymers and terpolymers are advantageously used to prepare barrier coating compositions, and barrier film substrates.

The invention is defined by the appended claims. In one aspect, the present invention provides a solution comprising a copolymer and solvent mixture, wherein the solvent mixture comprises water and 50 wt% to 95 wt% lower alcohols, wherein a lower alcohol is either isopropanol, ethanol, n-propanol, or butanol, wherein the solids content is 3 wt% to 40 wt%, and wherein the copolymer comprises:

a) vinyl acetate; and
b) isopropenyl acetate;

wherein the copolymer is greater than 90mol% hydrolyzed; wherein the molar ratio of isopropenyl alcohol in the copolymer is 10 mol% to 50 mol%.

In another aspect, the copolymer in the solution of the present invention is a terpolymer; further comprising: at least one additional polymerizable monomer.

The copolymers and terpolymers of the invention are soluble in solvent mixtures comprising water and lower alcohols, wherein the amount of alcohol is 50% to 95%. Solutions containing 3% to 40% solids can be obtained.

In another aspect, the present invention provides a barrier coating composition comprising the copolymer or terpolymer as described above.

Further improvements can be made to the coating compositions with addition of additives, e.g. cross-linking reagents, to improve properties such as moisture resistance.

## DETAILED DESCRIPTION

Polyvinyl alcohol polymers are commonly used in gas barrier coating compositions. The gas barrier performance, and solubility in water and co-solvents such as alcohol, depends on the degree of hydrolysis and molecular weight.

For high speed printing and coating, it is desirable to prepare the polyvinyl alcohols in solvents containing water and co-solvents, such as alcohols. It is preferable to use higher amounts of alcohol to facilitate rapid evaporation of the solvent, and thus increase drying speed of the coating during printing. However, conventional polyvinyl alcohols with a high degree of hydrolysis are soluble only when the water/co-solvent contains a maximum of about 50% alcohol. Solubility in alcohol can be improved by reducing the degree of hydrolysis, to below 90%. Increasing the ethylene content on the polyvinyl alcohol backbone has also been shown to improve alcohol tolerance, albeit to a limited extent. Increasing the ethylene content to greater than 20 mol% reduces the oxygen barrier performance, and the solution pot life is extremely limited.

Polyvinyl alcohols with a high degree of hydrolysis are preferred for gas barrier performance. Polyvinyl alcohols with a high degree of hydrolysis, such as greater than 96%, show good barrier properties, while at below 90% hydrolysis gas barrier properties rapidly diminish. The hydrogen bonding between hydroxyls on the backbone of highly hydrolyzed polyvinyl alcohol reduces the free volume while increasing the tortuous path for oxygen and carbon dioxide, leading to improved barrier properties. When the polyvinyl alcohol is less hydrolyzed, the residual acetate groups in partly hydrolyzed polyvinyl acetate are essentially hydrophobic and weaken the intermolecular and intramolecular hydrogen bonding. Thus, higher degrees of hydrolysis are desired to optimize gas barrier performance.

However, fully hydrolyzed polyvinyl alcohols have limited alcohol tolerance, up to a maximum of about 50% alcohol in the solvent mixture. A higher water content is required to enable dissolution of polymer, and this limits the final application in which drying temperature and drying speed and in-line coating applications can be affected. Reducing the degree of hydrolysis of the polyvinyl alcohol improves alcohol tolerance, but gas barrier properties are compromised as the degree of hydrolysis is reduced.

The copolymers and terpolymers for use in the present invention provide several advantages over those currently available. For example, there is no need for complicated polymer synthesis which would involve the need to use strong metal hydride reducing agents. Polymerization of monomers does not require high pressure or long reaction times. The

monomers do not need activating to achieve good yields or molecular weights. There are significant cost and time savings involved to prepare the modified resins. The modified copolymers and terpolymers can either be isolated as dry resins, or converted into polymeric solution, with viscosities adjusted for the desired application. Synthesis of the copolymers and terpolymers is amenable to scale-up. The properties of the modified polymers enable them to tolerate high alcohol content. There is no need for additives to improve properties of the polymers, such as, for example, bond strengths in laminated structures with or without the presence of nanoplatelets. Compositions prepared with the polymers can have high solids content without any significant increases in viscosity. The modified polymers are stable in solutions with a high alcohol content, and at a range of different temperatures, without gelling. Solutions of the modified polymers can be applied by a range of techniques known in the art. Barrier coatings comprising the modified polymers can be coated by gravure or CI flexographic printing techniques, running in-line for CI flexographic and gravure printing processes, thereby reducing time and costs due to the ability of high alcohol tolerant modified resins drying significantly faster than non-modified polyvinyl alcohols. Retained solvents in dried coating compositions comprising the modified polymers are well under the regulatory limits (such as below 600 $cm^2$/ 1 kg food in the EU packaging model). Resins comprising the modified polymers can be improved by the addition of additives, such as, for example, crosslinkers, to improve properties such as moisture resistance. Resins comprising the modified polymers can be converted into barrier films of varying thickness in their own right, which have the ability to dissolve in water. Barrier films based on modified resins can be improved further, extending potential applications, with the addition of additives, such as fillers and others known in the art of making films based on polyvinyl alcohol.

Although the use of polyvinyl alcohol type structures show proven oxygen barrier properties and are currently the polymer of choice for a variety of applications, commercially available polyvinyl alcohols produced globally do not tolerate high alcohol levels above 50%. The present invention provides reduced costs by using polymer blends or additives. Increasing the alcohol content in the solvent mixture to greater than 50% delivers good solution stability. Coating compositions comprising the polymers for use in the invention exhibit fast drying performance on presses with limited drying capacity, and the ability to print in-line via CI flexographic and gravure printing processes.

In one aspect, the present invention provides a solution comprising a copolymer and solvent mixture, wherein the solvent mixture comprises water and 50 wt% to 95 wt% lower alcohols, wherein a lower alcohol is either isopropanol, ethanol, n-propanol, or butanol, wherein the solids content is 3 wt% to 40 wt%, and wherein the copolymer comprises:

a) vinyl acetate; and
b) isopropenyl acetate;

wherein the copolymer is greater than 90 mol% hydrolyzed; wherein the molar ratio of isopropenyl alcohol in the copolymer is 10 mol% to 50 mol%.

In another aspect, the copolymer in the solution of the present invention is a terpolymer; further comprising: at least one additional polymerizable monomer.

The copolymers and terpolymers used in the invention are soluble in solvent mixtures comprising water and lower alcohols, wherein the amount of alcohol is 50% to 95%. Solutions containing 3% to 40% solids can be obtained.

In another aspect, the present invention provides a barrier coating composition comprising the copolymer or terpolymer as described above.

Further improvements can be made to the coating compositions with addition of additives, e.g. cross-linking reagents, to improve properties such as moisture resistance.

Oxygen transmission rates (OTR) of < 20 cc/$m^2$/day at 23°C and 65/0% RH or 50/50% RH, when applied at a dry film thickness of < 0.5 $\mu$m, are preferred. For example, OTR of < 15 cc/$m^2$/day at 23°C and 65/0% RH or 50/50% RH; or < 10 cc/$m^2$/day at 23°C and 65/0% RH or 50/50% RH. For example, OTR of < 7 cc/$m^2$/day at 23°C and 50% RH, when applied at a dry film thickness of < 0.5 $\mu$m are achieved by the barrier compositions of the present invention. Good oxygen barrier performance can be achieved at a dry film thickness of < 1$\mu$m, or < 0.5 $\mu$m, or < 0.3 $\mu$m.

## Definitions

In this application, the use of the singular includes the plural unless specifically stated otherwise. As used herein, the singular forms "a," "an" and "the" are intended to include plural forms as well, unless the context clearly indicates otherwise.

In this application, the use of "or" means "and/or" unless stated otherwise.

As used herein, the terms "comprises" and/or "comprising" specify the presence of the stated features, integers, steps, operations, elements, and/or components, but do not preclude the presence or addition of one or more other features, integers, steps, operations, elements, components, and/or groups thereof. Furthermore, to the extent that the terms "includes," "having," "has," "with," "composed," "comprised" or variants thereof are used in either the detailed description or the claims, such terms are intended to be inclusive in a manner similar to the term "comprising."

As used herein, ranges and amounts can be expressed as "about" a particular value or range. "About" is intended to also include the exact amount. Hence "about 5 percent" means "about 5 percent" and also "5 percent." "About means within typical experimental error for the application or purpose intended.

As used herein, the terms "coating(s)," "coating composition(s)," "barrier coating composition(s)," "barrier coating(s)," and "barrier composition(s)" are used interchangeably.

As used herein, the term "barrier film" refers to a film substrate, that is suitable to be formed into a package, that hinders the permeation of gases such as oxygen or carbon dioxide, moisture, vapors, and aromas.

As used herein, the terms "resin" and "modified resin" refer to the copolymers and terpolymers of the invention.

As used herein, the term "copolymer" means a polymer that contains two or more different monomers.

As used herein, the term "terpolymer" means a copolymer that comprises three or more distinct monomers.

As used herein, use of the term "copolymer," without specific reference to "terpolymer," is understood to encompass both copolymers and terpolymers.

Where the terms "polymer" or "polymers" are used to refer to compositions of the invention, it is understood that these terms refer to copolymers and/or terpolymers of the invention.

As used herein, the phrase "polymer based on vinyl acetate and isopropenyl acetate" refers to a polymer that is synthesized using as at least two of the components vinyl acetate and isopropenyl acetate. Other components and reagents may be used in the synthesis.

As used herein, the phrase "polymer based on vinyl alcohol and isopropenyl alcohol" refers to the hydrolyzed versions of the polymers synthesized using as at least two of the components vinyl acetate and isopropenyl acetate. Other components and reagents may be used in the synthesis.

Throughout this disclosure, all parts and percentages are by weight (wt% or mass% based on the total weight) and all temperatures are in °C unless otherwise indicated.

Copolymers and Terpolymers

The copolymers and terpolymers for use in the present invention have at least one unit derived from isopropenyl acetate, and at least one unit derived from vinyl acetate and derivatives thereof. Terpolymers of the present invention comprise other polymerizable monomers. These other polymerizable monomers are preferably used at less than 25%, more preferably less than 10%, and most preferably 5% or less by weight, based on the total weight of the copolymer composition. For example, these other polymerizable monomers may be included in an amount of 0.5% to 25%; or 2% to 10%; or 1% to 5%. Other polymerizable monomers include, but are not limited to, ethylene, propene, 1-butene, isobutylene, 1,3-butadiene, styrene, $\alpha$-methylstyrene, vinyl chloride, acrylonitrile, maleic anhydride, methyl acrylate, methyl methacrylate, N-vinyl-N-methylformamide, vinyl acetamide, N-vinyl formamide, N-(hydroxymethyl)-N-vinylformamide hydroxyethyl acrylate, methyl vinyl ketone and diacetone acrylamide, and mixtures thereof.

In a preferred embodiment, the barrier coating compositions of the present invention are based on fully hydrolyzed versions of polyvinyl alcohols. Preferably, the polyvinyl alcohols are greater than 90% hydrolyzed, and more preferably greater than 95% hydrolyzed. The inherent hydrogen bonding within polyvinyl alcohol and increased crystallinity significantly decreases the permeation of gases through the coating by reducing the free volume.

Usually, water is the main solvent in which polyvinyl alcohols are dissolved, showing limited solubility in many other desirable organic solvents due to strong intermolecular and intramolecular hydrogen bonding. The solubility of polyvinyl alcohol in water and co-solvents such as alcohols depends on the degree of hydrolysis and molecular weight. Fully hydrolyzed polyvinyl alcohols have limited alcohol tolerance, up to a maximum of 50% alcohol in the solvent mixture. A higher water content is required to enable dissolution of polymer, and this limits the final application. Drying speed is reduced, and higher drying temperatures may be required, affecting the performance of in-line coating applications.

There are a number of alternatives available, which may improve the solubility of polyvinyl alcohol in alcohol. For example, polyvinyl alcohols with different degrees of hydrolysis, retaining a proportion of the acetate function on the backbone, could be used. However, gas barrier properties may be compromised below 90% hydrolysis. The residual acetate groups in partly hydrolyzed polyvinyl acetate are essentially hydrophobic and weaken the intermolecular and intramolecular hydrogen bonding, reducing gas barrier properties.

Polymers have been synthesized which address issues of higher alcohol tolerance and improved barrier properties. The polymers are based on polyvinyl alcohol, but differ either by the addition of an extra methylene and/or methyl group, e.g. polyallyl alcohol and polymethallyl alcohol, as shown below.

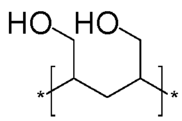 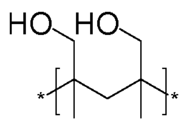

These polymers demonstrate good barrier properties. For example, polymethallyl alcohol delivers extremely good barrier performance up to 90% relative humidity at a film thickness of less than 1 μm dry. A key feature of these types of polymers is the presence of hydroxyl functionality, and the additional methylene and/or methyl group on the backbone. Retaining hydrogen bonding within the polymer is paramount to providing the necessary barrier properties. The presence of the additional methylene and/or methyl group improves the alcohol tolerance in these systems. However, polyallyl alcohol and polymethallyl alcohol are not widely accessible, and the synthesis is not amenable to scale up. Allyl alcohol and methallyl alcohol and their acetate derivatives cannot be efficiently polymerized due to degradative chain transfer. Also, activation of the double bond by strong electron withdrawing groups has not been well documented, and additional modifications would increase the number of steps and costs of an already expensive monomer. The only method currently used to synthesize these types of homopolymers involves the synthesis of polyacrylic and polymethacrylic esters. The homopolymers are then reduced by metal hydrides such as lithium aluminum hydride in N-methyl morpholine as the solvent. Lithium aluminum hydride is difficult to use due to its pyrophoric nature, and cannot be used on an industrial scale. Alternatively, catalytic hydrogenation of the ester group in the homopolymers has also been unsuccessful, most likely due to the sterically hindered ester group present in polymethacrylate.

A key feature of these types of polymers is the presence of hydroxyl functionality and the additional methylene and/or methyl group on the backbone. Retaining hydrogen bonding within the polymer is paramount to providing the necessary barrier properties. The presence of the additional methylene and/or methyl group improves the alcohol solubility in these systems. Increasing hydrogen bonding within the polymer significantly decreases the permeation through the coating.

As shown herein, compositions containing isopropenyl alcohol show good solution stability, whilst retaining barrier properties and bond strengths within laminated structures. In the present invention, utilizing isopropenyl acetate in the form of isopropenyl alcohol on the backbone of the copolymer or terpolymer to modulate the performance of polyvinyl alcohol enables the synthesis of a range of copolymers and terpolymers with higher than expected alcohol tolerance, while still retaining the barrier properties and hydrogen bonding.

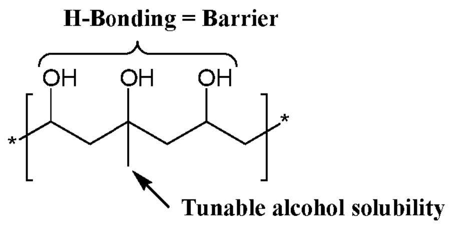


The degree of hydrolysis of the final copolymer or terpolymer is greater than 90%, or greater than 93%, or greater than 95%, and more preferably greater than 96%, whilst still maintaining a high degree of alcohol tolerance due to the presence of the methyl group present on the backbone ($CH_2CH(OH)CH_2C(OH)CH_3$). The copolymers are soluble in solvent mixtures containing more than 50% alcohol, preferably more than 60%, and more preferably more than 70% alcohol.

The copolymers and terpolymers based on isopropenyl alcohol mimic the structure of polyvinyl alcohol and ethylene vinyl copolymers. Isopropenyl acetate alone cannot be efficiently polymerized at one atmosphere to give high molecular weight polymers. However, copolymers and terpolymers can be synthesized having at least one olefin derived from isopropenyl acetate and at least one unit derived from vinyl acetate and other derivatives thereof, to give high molecular weight polymers.

The polymerization is normally conducted at a temperature in the range between 20°C to 110°C under an inert atmosphere in the presence of a free radical initiator. Suitable radical initiators include, but are not limited to: azo compounds such as 2,2'-azobisisobutyronitrile, 1,1'-azobis(cyclohexanecarbonitrile), 4,4-azobis(4-cyanovaleric acid); peroxide compounds, such as benzoyl peroxide, 2,2-bis(tert-butylperoxy)butane, tert-butyl hydroperoxide, cyclohexanone peroxide, lauroyl peroxide; and other known catalyst systems. A preferred embodiment for preparing copolymers and terpolymers can be selected from the conventional techniques such as solution, suspension, emulsion, and bulk polymerizations. Bulk polymerization is the preferred technique to prepare copolymers and terpolymers based on isopropenyl acetate, and azo compounds are the preferred radical initiators, but other processes and radical initiators known in the art may be used. High yields are produced and very high purity products formed, adaptable to copolymerization with other compatible monomers.

The present disclosure describes a method for preparing a range of copolymers and terpolymers having at least one olefin derived from isopropenyl acetate and at least one unit derived from vinyl acetate and derivatives thereof, which can include, but are not limited to, copolymers comprising vinyl and the following examples: ethylene, propene, 1-butene, isobutylene, 1,3-butadiene, styrene, α-methylstyrene, vinyl chloride, acrylonitrile, maleic anhydride, methyl

acrylate, methyl methacrylate, hydroxyethyl acrylate, methylvinyl ketone and diacetone acrylamide. The polymerized copolymers or terpolymers can then be diluted, for example, with methanol and treated with a catalytic amount of base such as potassium hydroxide or sodium hydroxide. The acetate group is then hydrolyzed to give the free hydroxyl group. The final product is then isolated in the conventional way known in the art for the synthesis of polyvinyl alcohol and ethylene vinyl copolymers and derivatives thereof. The fully hydrolyzed copolymers or terpolymers can be isolated as a dry resin, or can be diluted with various alcohol solvent mixtures, preferably wherein the amount of alcohol is greater than 50%, more preferably greater than 60%, and most preferably greater than 70%, with a solids content varying from 3% to 40% solids, or 3% to 30% solids, and preferably 3% to 25% solids, depending on the degree of polymerization and application viscosity.

The molar ratio of isopropenyl alcohol and vinyl alcohol incorporated into the backbone is important to achieve the desired barrier properties and high alcohol tolerance, as well as affecting the degree of oxygen barrier at increasing levels of relative humidity. The molar ratio of isopropenyl alcohol in the copolymer and terpolymers is 10 mol% to 50 mol%, or 15 mol% to 34 mol%. The molar ratio of isopropenyl alcohol is important to achieve the required alcohol tolerance of 50-95% without increasing the gas permeation. The fully hydrolyzed copolymers and terpolymers are soluble in a range of organic solvents, such as alcohols, including isopropanol, ethanol, n-propanol and butanol, and can include the addition of up to 10% esters, more preferred up to 5% of esters, such as ethyl acetate, isopropyl acetate, n-propyl acetate, and combinations thereof. In comparison, conventional polyvinyl alcohol and ethylene vinyl copolymers up to 20 mol% are considered water-soluble polymers. Additions up to around 20-30% ethanol or propanol to aqueous solutions are normal and provide longer cold storage stability and help increase the drying speed of coatings formulations. Polyvinyl alcohol and ethylene vinyl co-polymers are available at varying molecular weights. The copolymers and terpolymers disclosed herein based on isopropenyl alcohol can surprisingly tolerate dilution with significantly higher levels of lower alcohols, up to and often beyond 50%. This property enables the formulation of coatings with higher polymer solids content than conventional products, and unusually high levels of alcohol diluents. Both of these features combine to give faster drying coatings when applying similar dry film weights compared to the more established poly vinyl alcohol formulations based on higher molecular weight grades, with equivalent desirable properties such as oxygen and carbon dioxide barriers. The result is fast drying, high solids (gas) barrier coatings suitable for applications for printing processes, preferably common impression flexographic printing presses, in-line with printing inks, to produce printed articles with gas barrier properties suitable for various types of packaging (e.g. food packaging) in a single operation.

Also provided are barrier coating compositions, particularly having the ability to block the ingress of aromas, oxygen and other gases such as carbon dioxide and nitrogen, and which can act as a mineral oil barrier, and which may be used to coat and impart barrier properties to a variety of materials, notably packaging for foods and pharmaceuticals, where exposure to oxygen needs to be eliminated or restricted.

The coating compositions can be coated on to a range of substrates, for example flexible substrates, which can include but are not limited to polyethylene (PE), polyethylene terephthalate (PET), biaxially oriented polyethylene terephthalate, biaxially oriented polyamide, polylactic acid and polyglycolic acid. Furthermore, substrates treated with $SiO_x$, $Al_2O]_3$ and metalized substrates treated with aluminum in order to improve barrier performance can be used. In addition, oriented polypropylene (OPP) and biaxially oriented polypropylene (BOPP) are also used as substrates in various types of packaging applications, such as for food packaging. These types of polyolefin films usually require a surface treatment to raise the surface energy of the surface to be coated. A common treatment used industrially is by use of a corona in air which oxidizes the surface of the film. Even after such treatments, reliable adhesion can be difficult to achieve, especially with coatings based upon polyvinyl alcohol and ethylene vinyl copolymers.

Additionally, a primer may be applied to the OPP or BOPP to improve adhesion by raising the surface energy further and altering the surface characteristics of the substrate prior to applying the barrier coating compositions described herein. Alternatively, an adhesion promoter can be added directly to the coating composition, typically between 0.1% and 2%, such as, for example, less than 1.5%, or less than 1%. Suitable adhesion promoters include, but are not limited to the following: polyethyleneimine, such as Lupasols supplied by BASF, for example Lupasol WF; organic titanates, such as Vertec IA10 Titanium organophosphate complex; organic complexes of zirconium, such as, for example, zirconium acetylacetonate; and propionate and diethyl citrate can also be used. The coating, once applied to a substrate, can be used in the form of monoweb or part of a multi-layer laminate structure.

Laminates generally consist of two or more films glued together using a suitable adhesive. This enables combinations of films in the final packaging material that confer important packaging properties such as heat-seal strength, rigidity, gas barrier etc. When coatings or even printing inks are applied to one of the films in such structures it is important that they do not interfere with the function of the adhesive, maintaining high lamination bond strengths. Bond strengths above 1.5 Newtons per 15 mm (N/15 mm) width of laminate are considered adequate. If the force required to pull apart the laminate causes it to tear, then the maximum bond strength recorded at that point is reported. Sometimes the direction of the tear is different, and the bond strength recorded equates to the tear strength of the layer concerned. Film tear indicates that the bond is stronger than 1 or more of the plies in the structure, and thus the actual lamination bond strength is higher than what is measured.

Another aspect of the invention is that fillers or extender pigments dispersed in the polymer solution may be used to create a tortuous pathway in the dry film, which further hinders the passage of gases such as oxygen and carbon dioxide, and moisture. Typically, clay minerals with aspect ratios between 20 and 30,000 are preferably used. Aspect ratio is the width of a particle divided by the thickness of a particle. Nanocomposites generally have a thickness less than 100 nm. Particularly preferred are those minerals having an aspect ratio greater than 100. Examples of suitable nanofillers (e.g. clays, filler and extender pigments) include kaolinite, montmorillonite, vermiculite, atapulgite, illite, bentonite, halloysite, kaolin, mica, diatomaceous earth and fuller's earth, calcined aluminium silicate, hydrated aluminium silicate, magnesium aluminium silicate, sodium silicate and magnesium silicate and layered double hydroxides. Commercial examples of suitable materials are Cloisite $Na^+$ (available from Altana BYK), and Bentone ND (available from Elementis). Of these, the clays, especially the montmorillonite clays, are preferred, nanoparticulate clays being most preferred. These particulates are often dispersed in aqueous mixtures with lower alcohols. For example, isopropanol, ethanol or n-propanol are typical co-solvents. The presence of water is essential to ensure the clays remain exfoliated and fully dispersed without flocculating. However, clays such as Cloisite 30B, available from Altana BYK (Additives GmbH), having a quaternary ammonium organic modifying reagent on the clay surface, are dispersible in neat alcohols without the need to add water as a co-solvent. Cloisite 30B, starting as a $Na^+$ montmorillonite, is prepared by exchange of the surface sodium counter ion with quaternary ammonium organic modifiers and exhibits a high a degree of exfoliation in alcohols, without the need for water as a co-solvent to stabilize the dispersion. This enables coating compositions described herein to contain higher levels of organic solvent in the final composition. A range of modified clays based on montmorillonite, vermiculites, smectites, and mica, modified with organic surfactants such as ammonium, phosphonium and other types of cationic organic modifiers, can significantly improve the total organic solvent content, thereby improving drying properties whilst maintaining barrier properties. Modified nanofillers can be prepared by methods known to those skilled in the art.

Crosslinking reagents can also be added to the composition to improve the barrier performance, and this is particularly relevant when high relative humidity conditions prevail. With the addition of suitable crosslinking agents, the compositions containing the copolymer or terpolymer for use in the invention, wherein the resulting coating can be 100% crosslinked upon drying, advantageously provide superior barrier properties. The presence of the crosslinking agents impart improved moisture resistance and extended applications in a variety of packaging articles, such as a laminate, lidding, or pouches, used for wet and/or chilled food packaged products. Examples of crosslinking agents include, but are not limited to the following: aminoplasts, such as melamine formaldehydes and urea formaldehydes (such as Cymel 385, 327, 323, 328 supplied Allnex; and MF920 supplied by INEOS); glyoxals and other dialdehydes, such as glutaraldehyde. Sol gel chemistry can also be used to crosslink the copolymers and terpolymers prior to coating to improve barrier properties at high relative humidity. Examples of sol gel crosslinking agents include, but are not limited to, tetramethyl orthosilicate, methyltriethoxysilane, allyltrimethoxysilane, [3-(diethylamino)propyl]trimethoxysilane, isobutyl(trimethoxy)silane, N-propyltriethoxysilane, tetrapropyl orthosilicate, triethoxy(octyl)silane, triethoxyphenylsilane, triethoxyvinylsilane, trimethoxymethylsilane, and trimethoxyphenylsilane,

In order to catalyse the crosslinking reaction, where appropriate, the pH of the coating composition is adjusted to slightly acidic values, preferably less than 7 and more preferably less than 5, to ensure effective crosslinking. A non-limiting list of examples of suitable catalysts employed in the invention include inorganic catalysts such as ammonium chloride, ammonium sulphate, nitric acid, sulphuric acid, hydrochloric acid, phosphorous acid, and perphosphoric acid; organic acids such as formic acid, acetic acid, propionic acid, butyric acid, caproic acid, lactic acid, malic acid, and citric acid; organic acids such as polyacrylic acids, polyacrylic co maleic acids, and polystyrene sulphonic acids.

The copolymers and terpolymers for use in the invention preferably have a glass transition temperature (Tg) of 45°C to 95°C. The glass transition temperature of the polymer is the temperature when the polymer goes from being hard and glassy to soft and flexible as it is heated, and the reverse when it is cooled.

The present invention relies on the presence of both vinyl alcohol and isopropenyl alcohol in the copolymers or terpolymers. The excellent adhesion capacity of these types of polyhydroxylated polymers to cellulosic materials makes it useful as an adhesive and coating material, highly resistant to solvents, oil and grease. The chemical resistance and physical properties of commercially available polyvinyl alcohol and ethylene vinyl copolymers have resulted in broad industrial use, such as textile sizing, adhesives, protective colloids for emulsionpolymerization, fibres, production of poly(vinyl butyral), and paper sizing. The predominant use and application of these types of polymers are either via coextrusion of pellets, orfrom aqueous solution of polyvinyl alcohol. Thus, polyvinyl alcohols have been used extensively in barrier applications for food packaging, and packaging for medicinal products, where the ingress of oxygenand other gases is reduced.

The present invention describes a barrier coating composition, tolerating high levels of alcohol as a co diluent, greater than 50% alcohol. Also disclosed is a method of formulating a coating based on said invention, and the ability to print a composition on a commercial printing press, demonstrating its effective use as a high speed, high alcohol tolerant coating composition based on isopropenyl co-vinyl alcohol. The copolymer and terpolymer compositions for use in the invention have at least one unit derived from isopropenyl acetate, and at least one unit derived from vinyl acetate,

and derivatives thereof. The solution comprises the copolymer or terpolymer in a blend of water and alcohol, with an alcohol content greater than 50%, that, when coated, provides a barrier coating for a variety of applications. There are an increasing number of applications which require a co-solvent such as alcohols. A number of coating applications require the need for volatile solvents such as isopropanol, ethanol and n-propanol to allow certain coatings processes, such as gravure and flexography, to run at speeds greater than 100 m/min. Conventional aqueous solutions of polyvinyl alcohol are run at slower speeds and high drying temperatures in coating applications to ensure the coatings dry prior to the next coating application. Ethylene vinyl co-polymers offer greater alcohol tolerance than straight polyvinyl alcohol polymers due to the presence of ethylene on the backbone of poly vinyl alcohol. However, the disadvantage of increasing ethylene content in co-polymers to improve the alcohol tolerance is that gas barrier performance is reduced, and short term stability with high alcohol solvency is limited. Solutions based on co-solvents of water and alcohol show short term cold (about 1°C to 6°C) storage stability of around 3-6 months. When allowed to stand for long periods at room temperature or at low temperature, the viscosity of these solutions increases progressively with time, and the fluidity ultimately disappears, resulting in a gel.

Increases in viscosity can thus be an indicator for gelation. Increases in viscosity are known to be dependent on a number of factors, for example the solvent and temperature at which vinyl acetate is polymerized, ultimately impacting on the solution stability over time. The dynamic response of gelation depends more on the crystalizability of polyvinyl alcohol, and this can be retarded by the presence of irregular structures such as co-monomers and 1, 2-glycol linkages, and also by tacticity and branching effects, but usually at the expense of gas barrier properties. The regularity of the polyvinyl alcohol or structures influence the degree to which it is rigid, crystalline, and has long range order within the structure, or it is flexible, amorphous, and has long range disorder. For barrier applications, crystallinity of the polyvinyl alcohol is essential.

Typically, barrier coatings based on polyvinyl alcohols and with an alcohol content of greater than or equal to 50% which are stable for up to 4 months and more are not available. The present invention provides barrier coating compositions based on polyvinyl alcohol and isopropenyl alcohol that contain greater than or equal to 50% alcohol, and which are stable for up to 4 months or more.

The present invention and examples demonstrate that gas barrier properties, with and without filler, can be achieved where copolymers and terpolymer based on isopropenyl alcohol are included in the barrier coating composition, in which the molar ratio of isopropenyl alcohol is 10 mol% to 50 mol%.

Advantageously, the final resins comprising the copolymers and terpolymers have a degree of polymerization of 20 - 2000. The copolymers and terpolymers based on isopropenyl alcohol and polyvinyl alcohol dissolve predominantly in alcohol with a co-solvent, usually water, in which the alcohol content is 50% or more, and provides a stable solution at room temperature. The polyvinyl alcohol and co-polymer with a high alcohol content of 50% or more can be further improved with a filler to impart a tortuous pathway to the transmission of gases. There are no published examples of barrier coatings based on fully hydrolyzed polyvinyl alcohols that are greater than 95% hydrolyzed, and with an alcohol content of greater than or equal to 50%, which are storage stable.

Compositions comprising the copolymers and terpolymers of the invention preferably have a viscosity of 3 mPas to 5 mPas, when measured as a 4% solution on a Brookfield viscometer at 20°C. For example, the compositions have a viscosity of 3.5 mPas to 4.5 mPas, or 3.1 mPas to 4 mPas, or 3 mPas to 3.2 mPas.

The unhydrolyzed copolymers and terpolymers typically have a molecular weight distribution of 10,000 to 300,000 Da. The fully hydrolyzed copolymers and terpolymers for use in the invention have a preferred molecular weight distribution of less than 150,000 Da, more preferably less than 100,000 Da, or less than 50,000 Da, or less than 20,000 Da, and most preferably less than 14,000 Da, determined using conventional and triple detection gel permeation chromatography. For example, the fully hydrolyzed copolymers and terpolymers can have a molecular weight of from 5,000 to 150,000 Da, or from 10,000 to 100,000 Da, or from 10,000 to 50,000 Da, or from 10,000 to 20,000 Da.

The copolymers and terpolymers are dissolved predominantly in a solvent typically comprising an alcohol and co-solvent such as water, in which the alcohol content is 50% or more, and provides a stable solution at room temperature. The copolymers and terpolymers with a high alcohol content of 50% or more can be further improved with a filler to impart a tortuous pathway for gases, aroma and mineral oils in the coating. In addition to nanoplatelets, crosslinking agents can also be added to improve coating performance such as barrier and moisture resistance. A feature of the present invention is the ability to blend water based dispersions of fillers with alcohol to ensure the overall alcohol content of the copolymers and terpolymers solution (i.e. the coating) has an overall alcohol content of 50% or more.

In addition, the modified resins comprising the copolymers and terpolymers can be made into barrier film substrates, via methods known in the art for making films based on polyvinyl alcohols. In certain embodiments, these barrier films can be water soluble. Films with barrier properties can be used in water soluble applications, and there has been an increase in the use of water soluble films globally. Water soluble films are amenable to use in applications such as packaging for detergents, agrochemical, chemical fertilizers, dyestuffs, water-sewer additives, mineral additives, concrete additives, chemicals for photography, chemicals for gardening, etc. Such applications can include packaging of vegetable seeds, other plant seeds, clothing, food, laundry bags in hospitals, as well as other uses for which water

soluble films are desirable.

## EXAMPLES

The following examples illustrate specific aspects of the present invention and are not intended to limit the scope thereof in any respect and should not be so construed.

Test Methods:

*Measure Degree of Hydrolysis*

The degree of hydrolysis was measured by FTIR, using a Nicolet 5700 FTIR spectrometer controlled by OMNIC software. An expanded spectrum in the 4000 to 400 $cm^{-1}$ range was used for measuring several factors, such as the broad, strong stretching vibration band at around 3400 $cm^{-1}$, the OH bending at around 1300 $cm^{-1}$, and the CO stretching (coupled to the C-C) at 1100 $cm^{-1}$, assigned to the secondary alcohol, with a spectral resolution of 4 $cm^{-1}$. Any unhydrolyzed acetate groups can be detected by the presence of the carbonyl stretching at around 1700 $cm^{-1}$. Each spectrum was the result of an average of 32 scans. FTIR analysis of solution samples were typically performed using a KBr disc, samples were gently dried on to the KBr disc, and then the FTIR was measured.

*Molecular Weight*

Gas Permeation Chromatography (GPC) triple detection and conventional GPC were used to determine the molecular weight of the samples. The samples were prepared in THF for 24 hours prior to filtering through a 0.45 μm syringe filter. Conventional GPC with a concentration calibration curve (RI, UV, ELSD), and a narrow/broad/integral calibration curve, were constructed from matching molecular weight reference standards and materials.

*Glass Transition Temperature (Tg)*

Samples were initially heated to 300°C to look at their thermal profiles and check decomposition temperatures. Based on this, the samples were then analyzed using a heat-cool-reheat method developed specifically for the samples. Samples were weighed into standard aluminum DSC pans, crimped, and then heated using the following heat-cool-reheat DSC temperature program. Tg's were seen in the first heat, the cooling curve, and then at a higher temperature during the second heat, after the solvent evaporation. The Tg's were measured during the second heats along with the magnitude of the step change, which relates to the amount of amorphous material present. The magnitude of the glass transitions and absence of any melting endotherms with subsequent recrystallization on cooling, would imply that the samples were mainly amorphous.

*% Non Volatile Content* (*% NVC)*

Approximately 1g of a coating was added into a petri dish, and the actual weight was recorded to two decimal places. The petri dish was then placed in an electrically heated fan assisted oven for 30 minutes at 150°C. The sample was then cooled to room temperature and re-weighed. The % NVC was calculated as follows:

$$\% \text{ NVC} = \text{final weight of dry coating (grams)} \div \text{Initial weight of wet coating (grams)} \times 100$$

*Gas Chromatography head space analysis of residual solvents*

Gas chromatography head space analysis of residual solvents was measured as follows: samples were prepared by coating the barrier composition onto a PET substrate. A 100 $cm^2$ sample of each print was supplied in a 22 ml headspace vial. A calibration standard was prepared by pipetting 200 μl of each organic solvent into a 10 ml grade A volumetric flask. This was then diluted to the mark with Analar grade acetone. Headspace calibration vials were prepared by using micro-capillaries to add known volumes of the calibration standard.

Headspace Conditions: CTC Automated Sampler using a gas tight syringe, incubation temperature set at 120°C with incubation time of 15 minutes. Syringe temperature was set at 120°C. An injection speed of 500 μl/min, and an injection volume of 1 ml was used.

GC/MS conditions were set as follows: column HP-VOC 30 m x 0.2 mm ID x 1.18 μm was used with an injector PTV CT-split, with an injector temperature of 200°C, and a split flow of 20 ml/min. MS quadrupole was employed, with

a scan range of 2- 260 *m*/*z* and a scan speed of 4 scans/seconds. The results are expressed as mg/$m^2$.

*Viscosity*

Viscosity was measured using a Brookfield DV-II+ Pro Viscometer, at 20°C. The copolymers and terpolymers were prepared in solution at 4% solids. An LV2 spindle was used, and the samples were tested at a shear rate of 60 rpm. Viscosity was reported as mPas.

*Storage Stability*

An initial viscosity of coating solution was measured using (Seta) Zahn cup #2 at 23°C. The initial viscosity was considered the application viscosity. 100 g of the coating solution was placed in a tightly sealed glass jar in a refrigerator set at 4°C. The sample was taken out periodically (every 4-5 days) and its viscosity measured. Changes in viscosity or appearance and homogeneity were considered negative factors, such as increases in viscosity to more than 25 seconds for gravure, and more than 30 seconds for flexographic printing processes. No visible phase separation is preferred. No clouding of solution of greater than 14 FTUs (units haze; see method below for solubility testing) is preferred.

*Solubility Test*

Solutions comprising 10% solids with increasing amounts of ethanol and a co-solvent such as water were prepared (Table 2). Ethanol content was gradually increased, and the haze was measured using a Hanna HI-93703 turbidity meter. A beam of infrared light (infrared LED) was passed through a vial containing the sample being measured. A sensor (silicon photocell), positioned at 90° with respect to the direction of light, detected the amount of light scattered by the undissolved particles present in the sample. The microprocessor converted the readings into FTU values. The turbidity is reported as Formazin Turbidity Units (FTU). At 10% solids with 80% ethanol, no visible phase separation and no clouding of the solution of greater than 14 FTUs (units haze) was considered a pass for solubility.

*Oxygen Transmission Rate (OTR)*

The oxygen transmission rates (OTR) of the coatings when applied to a polyester film were determined on a Mocon Oxtran 2/21 gas permeability tester at 23°C and 65/0% relative humidity. This condition represents the normal test protocol for dry food packaging. This means that the permeant gas ($O_2$) is adjusted to 65% RH (at 23°C) and the carrier gas (100% $N_2$) to 0% RH (at 23°C). In addition, Mocon Oxtran 2/21 gas permeability tester at 23°C and 50/50% relative humidity conditions were also evaluated.

The substrate used was freshly corona discharge treated 12 micron PET films (Mylar 800 or Melinex S from DuPont). The coatings were applied with a No. 0 K-Bar (ex. RK Print), delivering about 4 microns wet film thickness, and were dried in a warm flow of air (lab prints were dried with a hair dryer).

The OTR of laminates based on PET-barrier coating-adhesive-PE structures were also assessed.

*Drying Speed (Lab Test)*

The coating solution was applied using a No. 0 K bar (manufactured by RK Print Coat UK Ltd.) to 12 micron Melinex S substrate that was freshly corona treated. A No. 0 K bar was used to apply the coating at approximately 4 grams per square meter wet film weight. Immediately after drawing down the coating film, a stopwatch was started, and the surface of the coating was examined at 5 second intervals by touching until the coating felt dry and there was no transfer of wet coating to the fingertip or apparent stickiness, whereupon the time taken to reach this condition was recorded.

*Drying Speed (Windmoeller & Holscher Soloflex Press Test)*

Coating examples were evaluated on a commercial Windmoller & Holscher (6 color common impression) Soloflex flexographic press. The coating under evaluation was pumped to print unit one and a typical packaging ink (Solimax, a nitrocellulose solvent based ink supplied by Sun Chemical Inc.) in the last print unit, No. 6. The drying air temperature of the press was set at 60°C and freshly corona treated Melinex S fed from the feed reel to the delivery reel. The speed of the press was gradually increased until such point that the packaging ink in unit No. 6 no longer transfered satisfactorily to the coating applied from unit No 1. At this point, the test was stopped and the speed reached just before the poor transference occurred was recorded. When the maximum speed of the press was reached without problems, the packaging ink was taken out of unit No 6 and placed in unit No. 5 and the trial continued in this fashion

until the speed at which failure to transfer properly was reached. The higher the speed (measured in m/min) and the lower the print unit number, indicates the faster drying examples.

*Adhesion*

Adhesion was measured using DRG 1112 polypropylene tape. A strip of the 25mm wide tape was pressed firmly onto a dried coating sample on the substrate of interest, and removed in several ways. Firstly by pulling the tape back upon itself at 180 degrees very quickly. Secondly by jerking the tape off at 90 degrees, and finally repeating the first test but at a very slow speed (eg 20 mm /min). The results are reported as percent (%) coating left adhering to the substrate. If the coating passes all tests a single result may be recorded ie 100%.

*Lamination Bond Strength*

Laminates were prepared by applying the coating to the treated side of polyester film. An adhesive was applied over the top of the dried coating then laminated to the treated side of a 30 μm gauge poly(ethylene) film. The adhesive used was supplied by Henkel, labeled LIOFOL UR39662 and UR6055, and was prepared according to the manufacturer's instructions and applied so as to achieve a final dry film weight of 4.32 gsm. The laminates were then stored for 14 days at 25°C to ensure full cure of the isocyanate-based adhesive. Bond strengths were measured on a JJ Lloyd LRX tensiometer using a cross head speed of 30 mm/min under 'T' peel separation conditions. Laminate samples were 15 mm wide and results are given in Newtons (grams force) per 15 mm (N/15 mm).

*Specac Blocking Test*

Coatings were printed on PET 12 μm film substrate. Dry film samples (10 $cm^2$) were placed in a Specac tester, with the coated side of the sample facing the reverse side (i.e. unprinted) PET film. Fifteen tons of pressure was applied for 24 hours, and then the films were peeled apart. The films were then visually inspected for damage to the printed coating, and transfer of the printed coating to the reverse, unprinted side of PET substrate. The results were rated on a scale of 0% to 100% transfer. A preferred positive result is indicated by 0%, that is, no transfer of the coating to the reverse side of the uncoated film. No transfer was observed in substrates coated with the barrier coatings of the invention, for coatings either with nanofillers or without.

*Pasteurization Test*

Pouches were prepared based on PET-barrier coating-adhesive-PE laminate structures, and sealed using a heat sealer, using the PE as the heat sealing layer. Pouches were then placed in a beaker of water at 85°C for 45 minutes. A "pass" rating was given if the pouch did not delaminate between the PET-PE layer, and no visible bubbles appeared in the clear laminate.

*24 hour Water Immersion Test*

Coating samples were coated onto the desired substrate (i.e. PET), and laminated to PE with an adhesive. Laminates were then converted into pouches using a RDSM HSE-3 Laboratory Heat Sealer. The heat seal jaws were set at 150°C, for 1 second dwell time, at 50 psi. The pouches were prepared containing 100% relative humidity to simulate wet food. Pouches were then placed in a bucket of tap water, ensuring that the pouch was fully immersed, and left for 24 hours to determine if delamination had occurred. Delamination typically occurs via the ingress of water between the coated PET substrate and the PE. No observable delamination was rated as a "pass."

*Barrier Films Based on Modified Resin*

A 40% aqueous solution of copolymer Example 3 (see Table 1) was dried down, and thin films of 9 μm and 130 μm thickness were prepared. Film thicknesses were measured using a Mitutoyo micrometer.

*Cold Water Solubility of Barrier Films Based on Modified Resin*

The cold water solubility of the barrier films was tested by dissolving 2 $cm^2$ of a film sample in 8 cc of cold water. The samples were either immersed in the water without stirring (static), or immersed in the water and the solution stirred (agitation). The time taken for the sample to dissolve was recorded.

## Example A1. Preparation of copolymer examples 1 to 9 based on vinyl acetate and isopropenyl acetate

To a reaction vessel was added 27.63 g (0.276 moles) of isopropenyl acetate and 55.1 g (0.64 moles) of vinyl acetate, and the vessel was then purged with nitrogen for 30 minutes at room temperature. Then 0.209 g ($1.27 \times 10^{-3}$ moles) of 2,2'-azobis(2-methylpropionitrile) was added under a blanket of nitrogen and the reaction vessel was then heated to 80°C and stirred at that temperature for 2 hours. Next, 0.066 g ($4 \times 10^{-4}$ moles) of 2,2'-azobis(2-methylpropionitrile) was added under a blanket of nitrogen and heating at 80°C continued with stirring for an additional 4 hours. Finally, 0.145 g ($8.8 \times 10^{-4}$ moles of 2,2'-azobis(2-methylpropionitrile) was added under a blanket of nitrogen and heating at 80°C was continued with stirring for a further 2 hours. The yield at this stage of the polymerization was greater than 80%, and no purification or isolation was necessary other than applying a vacuum at 50°C for 40 minutes to remove any volatiles. At this point, the acetate copolymer can either be cooled to room temperature where a highly viscous or clear solid resin will form, or used immediately for the next step. To 41.21 parts of the acetate copolymer was added 58.3 parts of methanol and the vessel was heated at 70°C until a homogenous solution was formed, and stirring began. Then 0.49 parts of sodium hydroxide was added portion wise over 30 minutes to the reaction vessel with stirring at 70°C until the acetate group had been fully hydrolyzed. Samples were taken periodically and analyzed by FTIR to ensure complete consumption of the acetate group to the free hydroxyl group. The final fully hydrolyzed copolymer was then isolated in the conventional way known in the art. Residual monomers, catalyst, by-products of the initiator and low molecular weight derivatives were washed from the final product with methanol, and then acetone. The final fully hydrolyzed product was then dried in an oven to give copolymer Example 4.

Copolymer Examples 1 to 3, and 5 to 9, were made in a similar manner, except that the amount of vinyl acetate and isopropenyl acetate was varied as shown in Table 1.

The copolymers thus prepared can be converted into a solution with alcohol and water as a co-solvent, at a desired solids and viscosity for its intended application. Typical solids from 3% to 40%, or from 6% to 30% can be achieved for applications such as gravure printing, where the application viscosity is 19 to 25 seconds Zahn cup 2 at 23° C, and for flexographic printing, where typical application viscosity doesn't exceed 30 seconds Zahn cup 2 at 23° C. Solutions containing 10% solids were prepared for testing as shown below.

**Table 1.** Formulation of copolymers based on vinyl acetate and isopropenyl acetate

| Polymer Example No. | Vinyl Acetate g (mols) | Isopropenyl Acetate g (mols) | acetate-*co*-isopropenyl acetate Yield(%) | Polyvinyl alcohol-*co*-isopropenyl alcohol Yield (%) | Hydrolysis Degree of d final copolymers (%) |
|---|---|---|---|---|---|
| 1 | 85.2 (0.99) | 27.63 (0.276) | 91 | 81 | 98.4 |
| 2 | 74.9 (0.87) | 27.63 (0.276) | 83 | 86 | 97.3 |
| 3 | 65.4 (0.76) | 27.63 (0.276) | 93 | 82 | 99.1 |
| 4 | 55.1 (0.64) | 27.63 (0.276) | 79 | 81 | 98.8 |
| 5 | 44.8 (0.52) | 27.63 (0.276) | 76 | 82 | 97.7 |
| 6 | 35.3 (0.41) | 27.63 (0.276) | 81 | 90 | 99.5 |
| 7 | 27.5 (0.32) | 27.63 (0.276) | 78 | 84 | 98.3 |
| 8 | 23.8 (0.276) | 27.63 (0.276) | 81 | 85 | 97.6 |
| 9 * | 13.8 (0.16) | 27.63 (0.276) | 59 | 92 | 98.1 |
| *: not according to the invention | | | | | |

Copolymers dissolved relatively easily, without long heating times, and at temperatures below 90°C (commercially available polyvinyl alcohols and ethylene vinyl copolymers typically require long heating times at temperatures above 90°C). Copolymer solutions showed good solubility with increasing alcohol tolerances (see Table 2a). Dry films of 0.4 μm in thickness were formed upon drying the coating. There were no indications of blocking, and adhesion was also very good on a variety of substrates (data not shown).

## Example A2. Solubility and oxygen transmission rate of co-polymer examples 1 to 6

Copolymer examples 1 to 6 were dissolved in aqueous solutions containing varying amounts of alcohol, as

shown in Table 2a. Examples 1 to 6 were dissolved in increasing ethanol content with water as a co-solvent at 10% solids. As the molar ratio of the vinyl acetate decreases, the isopropenyl acetate content increases, and the implication is that while the hydroxyl content remains the same (fully hydrolyzed), the alcohol tolerance increases due to the presence of the additional methyl group on the backbone of the isopropenyl alcohol within the copolymer. Thus, an ethanol content of 80% is achievable.

**Table 2a.** Solubility of copolymer examples 1 to 6

| **EtOH:$H_2O$ at 10% solids % solids** | **Co-polymer Example No. (mol% isopropenyl alcohol content)** | | | | | |
|---|---|---|---|---|---|---|
| | **1(21.8)** | **2(24.1)** | **3(26.6)** | **4 (30.0)** | **5(34.6)** | **6(40.0)** |
| **54:36** | √ | √ | √ | √ | √ | √ |
| **58:32** | √ | √ | √ | √ | √ | √ |
| **61:29** | √ | √ | √ | √ | √ | √ |
| **63:27** | √ | √ | √ | √ | √ | √ |
| **65:35** | X | √ | √ | √ | √ | √ |
| **67.5:32.5** | X | √ | √ | √ | √ | √ |
| **70:30** | X | √ | √ | √ | √ | √ |
| **75:25** | X | √ | √ | √ | √ | √ |
| **80:20** | X | X | √ | √ | √ | √ |
| √ = Pass for solubility; X = Fail for solubility - see solubility Test Method | | | | | | |

Table 2a shows that as the amount of isopropenyl alcohol content in the co-polymer increases, the solubility in alcohol increases. As can be seen in Table 2a, co-polymer examples 3 to 6, with isopropenyl alcohol content of greater than 26 mol% are soluble in aqueous solutions containing 80% ethanol.

An aqueous solution containing 50% alcohol, and 10% solids, of each of co-polymer examples 1 to 6 was coated onto PET, at a film weight of 4 gsm, using a No. 0 K-bar. The oxygen transmission rate was measured as described above, with relative humidity of 65/0% or 50/50%. The results are shown in Table 2b.

**Table 2b.** Oxygen transmission rate of co-polymer examples 1 to 6

| **Co-Polymer Example No.** | **Isopropenyl alcohol content (mol%)** | **OTR cc/$m^2$/day 4 gsm wet *monoweb*** | |
|---|---|---|---|
| | | **65/0% RH** | **50/50% RH** |
| 1 | 21.8 | 3.1 | 11.6 |
| 2 | 24.1 | 3.9 | 10.4 |
| 3 | 26.6 | 2.73 | 14.3 |
| 4 | 30 | 3.14 | 16 |
| 5 | 34.6 | 6.3 | 18.7 |
| 6 | 40 | 5.7 | 14 |

The results in Table 2b show that co-polymer examples 1 to 6, based on vinyl acetate and isopropenyl acetate, show very good oxygen barrier properties.

**Example A3. Molecular weight and glass transition temperature (Tg) of co-polymer examples 1 to 6**

The number average molecular weight ($M_n$) and the weight average molecular weight ($M_w$) of the non-hydrolyzed co-polymer examples 1 to 6 were measured using Gas Permeation Chromatography (GPC) determined by both the conventional and triple GPC methods. The dispersity "D" was calculated as $M_w/M_n$. Molecular weight of the fully hydrolyzed co-polymers would be less (about half) due to the conversion of the acetate groups to hydroxyl groups. The glass transition temperature (Tg) of the fully hydrolyzed co-polymer examples 1 to 6 were measured as described above. The results are shown in Table 3 below.

**Table 3.** Molecular weight and Tg of co-polymer examples 1 to 6

| | Conventional GPC Unhydrolyzed acetate copolymers | | | Triple GPC Unhydrolyzed acetate copolymers | | | Tg Fully hydrolysed copolymer |
|---|---|---|---|---|---|---|---|
| Co-Polymer Example No. | | $M_n$ $M_w$ | D | | | $M_n$ $M_w$ D | °C |
| 1 | 75,612 | 185,120 | 2.4 | 81,803 | 220,583 | 2.7 | 70.6 |
| 2 | 55,691 | 116,221 | 2.1 | 74,042 | 132,250 | 1.8 | 68.85 |
| 3 | 44,436 | 94,025 | 2.1 | 52,099 | 97,843 | 1.9 | 73.9 |
| 4 | 40,170 | 81,499 | 2.0 | 41,365 | 86,057 | 2.1 | 73.5 |
| 5 | 40,685 | 75,956 | 1.9 | 44,331 | 81,740 | 1.8 | 78.42 |
| 6 | 27,503 | 54,270 | 2.0 | 34,377 | 57,014 | 1.7 | 73.1 |

Table 3 shows that copolymer examples 1 to 6 are within the desired range for molecular weight of the non-hydrolyzed co-polymers. Glass transition temperatures are within the typical expected range for commercial polyvinyl alcohols and ethylene vinyl copolymers. The glass transition temperature of the polymer is the temperature when the polymer goes from being hard and glassy to soft and flexible as it is heated, and the reverse when it is cooled. The glass transition temperature is quoted at a specific temperature in Table 3, and the molecular weight distribution will have an effect. The glass transition temperatures shown for the fully hydrolyzed copolymers are in the expected region. Such copolymers show superior block resistance, scratch and abuse resistance, and properties generally required of good film forming resins suitable for coating applications.

**Example A4. Barrier coating compositions containing copolymer examples 1 to 5 and nanofillers**

The fully hydrolyzed copolymer examples 1 to 5 were further modified by the addition of nanofillers, for example exfoliated bentonite clay. The formulations are shown as examples 10 to 14 in Table 4 below. The clay was supplied by Southern Clays Inc. as Cloisite $Na^+$, but other nanofillers could also be used. Care was taken to ensure that the correct amount of alcohol was present so as not to cause solution or clay dispersion instability in each case. Selected clay composite formulations were compared alongside the commercial polyvinyl alcohol in comparative example 34 on a Windmoeller and Holscher 6 colour Soloflex common impression flexographic press. Comparative example 34 represents the commercially available product, SunBar Gen 1.1 (parts A [SX011] and B [SX012] combined). Coatings were applied at 4 gsm wet onto freshly corona treated Mylar 800 PET, drying at 50°C. Lamination bond strength and OTR were measured as described above. The results are shown in Table 4.

**Table 4**. Coating compositions based on copolymer examples 1 to 5 with clay

| | 10 (Copolymer Ex. 1) | 11 (Copolyme Ex. 2) | 12 (Copolyme Ex. 3) | 13 (Copolyme Ex. 4) | 14 (Copolyme Ex. 5) |
|---|---|---|---|---|---|
| Copolymers | 5 | 5 | 5 | 5 | 5 |
| EtOH | 57.7 | 58.9 | 57.7 | 57.7 | 58.9 |
| $H_20$ | 35.15 | 33.95 | 35.15 | 35.15 | 33.95 |
| Cloisite $Na^+$ | 2.15 | 2.15 | 2.15 | 2.15 | 2.15 |
| Total | **100** | **100** | **100** | **100** | **100** |
| Binder:Filler | 2.32:1 | 2.32:1 | 2.32:1 | 2.32:1 | 2.32:1 |
| Solids % | 7.15 | 7.15 | 7.15 | 7.15 | 7.15 |
| Lamination bond strength | 1.8N Film tear | 1.9N Film tear | 1.8N Film tear | 2.5N Film tear | 5.4N Film tear |
| OTR 65/0% RH PET:PE | 6 | 3.6 | 5.5 | 3.9 | 3.49 |
| OTR 50/50% RH PET:PE | 5.1 | 2.9 | 2.7 | 2.9 | 2.23 |

OTR is reported as $cc/m^2/day$ at 23°C; lamination bond strength is N/15 mm.

Addition of nanofillers improves the barrier performance, as shown by a comparison of the OTR data of Table 4 versus Table 2. As described above, a lamination bond strength of above 1.5 N/mm width of laminate is preferred. The results in Table 4 show that the lamination bond strength was in the preferred range, and that failure was generally due to film tear. Film tear indicates that the bond is stronger than one or more of the plies in the structure, and thus the actual lamination bond strength is higher than what is measured.

**Example A5. Barrier coating compositions containing copolymer examples 3 and 4, and an additional copolymer**

The addition of one or more other copolymers to the barrier coating composition further improves barrier performance. It is well known in the art that the addition of poly acids, such as polymethacrylic acid or polyacrylic acid, to polyvinyl alcohols, improves the barrier performance of polyvinyl alcohols at high relative humidity. The improvement of barrier properties can either be facilitated by hydrogen bonding interactions or via a crosslinking reaction, when sufficient heat is applied when the coating or film dries.

A polyacrylate copolymer, Sokalan CP13S (from BASF) was added to barrier coating compositions comprising copolymer examples 3 and 4, to give examples 15 and 16, respectively. Lamination bond strength, and oxygen transmission rate were measured for each of examples 15 and 16. The formulations and test results are shown in Table 5. "FT" indicates that the film tore before separation of the laminate layers.

**Table 5**. Barrier coating compositions comprising copolymer examples 3 and 4, clay, and Sokalan CP13S

| | 15 (Copolymer: Ex. 3 table 1) | 16 (Copolymer: Ex. 4 table 1) |
|---|---|---|
| **Copolymers** | 4.48 | 4.83 |
| **EtOH** | 55.6 | 55.32 |
| **$H_20$** | 36.47 | 36.3 |
| **Cloisite** | 2.03 | 2.02 |
| **Sokalan CP13S** | 1.42 | 1.53 |
| **Total** | **100** | **100** |
| **Binder:Filler** | 2.91:1 | 314:1 |
| **Solids %** | 7.93 | 8.38 |
| **Lamination bond strength** | 5N FT | 3.2N FT |
| **OTR 65/0% RH** | 0.93 | 0.91 |
| **OTR 50/50% RH** | 1.09 | 1.2 |

OTR is reported as $cc/m^2/day$

The results in Table 5 above show that the addition of an additional copolymer to the barrier coating compositions improves barrier performance even further, such that oxygen transmission rates are less than 2 $cc/m^2/day$ at 50/50% RH and at 65/0% RH, with a dried film thickness of less than 0.3 μm.

**Example A6. Barrier coating compositions containing copolymer example 3 and various clays**

Other clays can be used, for example bentonite clays, such as Kunipia, manufactured by Kunimine Industries. Good barrier performance can be achieved, of less than 1 $cc/m^2/day$, at 50/50% RH and 65/0% RH, at a dry film thickness of 0.3 μm, whilst maintaining a high level of alcohol in the final composition of greater than 50%. Modified Kunipia G clay, modified with an ammonium organic modifier dispersed in alcohol, also shows very good barrier properties, with an alcohol content of greater than 70%. Oxygen transmission rate was measured as described above. The formulations and test results are shown in Table 6 below.

**Table 6**. Barrier coating compositions containing various clays

| | **17** | **18** |
|---|---|---|
| Copolymer (Ex.3 table 1) | 4.26 | 3.96 |
| EtOH | 58.2 | 79.34 |
| $H_20$ | 30.27 | 13.3 |
| Kunipia G4 | 1.9 | - |
| Kunipia G Modified clay | | 2.15 |
| Sokalan CP13S | 5.37 | 1.25 |
| **Total** | **100** | **100** |
| Binder:Filler | 2.94:1 | 1.84:1 |
| Solids % | 7.5 | 7.36 |
| OTR 65/0% RH | 0.76 | 2.14 |
| OTR 50/50% RH | 0.55 | 1.66 |

OTR is reported as $cc/m^2/day$

The results in Table 6 demonstrate that not only can other types of clays be used with the copolymers based on isopropenyl alcohol and vinyl alcohol, but also modified clays dispersed in alcohols also show excellent compatibility,

good barrier properties, and improved drying performance due to higher levels of alcohol in the coating compositions. The barrier coatings of the invention, containing greater than 50% alcohol, generally dry 3 to 4 times as fast as barrier coatings based on conventional polyvinyl alcohol containing up to 30% alcohol.

**Example A7. Barrier coating compositions comprising copolymer example 3, clay, and a crosslinking agent**

The scope of the invention can be further expanded by taking the high alcohol tolerant copolymer compositions and adding a crosslinking agent, such as melamine formaldehyde (Cymel XW3106 from Allnex). Examples 19 and 20 were prepared as shown in Table 7. The oxygen transmission rate of barrier coating composition examples 19 and 20 are shown in Table 7.

**Table 7**. Barrier coating formulations with crosslinking agent (Cymel XW3106)

| | 19 | 20 |
|---|---|---|
| Copolymers (Ex. 3 table 1) | 4.15 | 2.82 |
| DI $H_20$ | 33.48 | 38.35 |
| EtOH | 58.56 | 54.7 |
| Cloisite | 1.8 | 2.5 |
| XW3106 | 0.42 | 0.56 |
| $H_2SO_4$ | 0.25 | 0.17 |
| Sokalan CP13S | 1.34 | 0.9 |
| **Total** | **100** | **100** |
| Solids | 7.71 | 6.78 |
| Binder:Filler | 3.28: 1 | 1.71: 1 |
| OTR 50/50% | 4.9 | 3.24 |
| OTR 65/0% | 6.24 | 6.54 |
| 24 hr water immersion test | Pass | Pass |

OTR is reported as $cc/m^2/day$

The results in Table 7 show that barrier coating compositions comprising the copolymers for use in the invention, clay, and a crosslinking agent show very good barrier properties. In addition, the moisture resistance is increased, and pouches prepared based on a PET-coating-adhesive-PE laminate structure, wherein the PE is the heat sealable layer, are able to survive over 24 hours immersed in water without the PET-PE layer delaminating due to water ingress.

**Example A8. Barrier coating compositions comprising copolymer example 3 and a sol gel crosslinking agent**

Sol gel crosslinking agents have also been found to improve the barrier performance of the native copolymers without the addition of nanoplatelets. Barrier coating compositions were prepared comprising copolymer example 3 and various amounts of the sol gel crosslinking agent tetraethyl orthosilicate (TEOS). The oxygen transmission rate of the barrier coating compositions was measured. The formulations and test results are shown in Table 8 below.

**Table 8**. Barrier coating compositions containing TEOS

| | 21 (Copolymer : Ex. 3 table 1) | 22 (Copolymer : Ex. 3 table 1) | 23 (Copolymer : Ex. 3 table 1) |
|---|---|---|---|
| Copolymers | 8.5 | 8.3 | 8.13 |
| EtOH | 69.51 | 67.94 | 66.43 |
| $H_20$ | 14.67 | 14.3 | 13.99 |
| Hydrochloric acid | 0.37 | 0.36 | 0.35 |
| TEOS | 7.5 | 9.1 | 12.5 |
| **Total** | **100.55** | **100** | **101.4** |
| | | | |
| % NV | 9.44 | 10.03 | 10.46 |
| Ex.3 (table 1):TEOS | 1.13:1 | 0.91:1 | 0.65:1 |
| OTR 50/50% RH Hair dryer | 5.45 | 4.25 | 4.37 |
| OTR 50/50% RH 70°C for 1min | 5 | 1.66 | 1.63 |

OTR is reported as cc/m$^2$/day

The results in Table 8 confirm that the addition of TEOS reduces the gas transmission of copolymer example 3 by nearly 3 times, from 14.3 cc/m$^2$/day to 5 cc/m$^2$/day, without the need for clay, after conventional drying. Furthermore, by exposing the coated film to 70°C heating for one minute, oxygen transmission rate is further reduced. Such improvements in barrier performance without the use of clay means that more flexible films can be applied where needed. One example where greater flexibility is called for is in thermoforming applications. In these instances, coating may be applied to a pre-formed article or film extrudate, and subsequently stretched in both the longitudinal and cross directions, at elevated temperatures. This requires significantly higher flexibility than is possible with coatings that contain clay.

**Example A9. Acetoacetate modified copolymers**

The backbone hydroxyl functionality of polyvinyl alcohols can be reacted with different types of reagents. In the preparation of, for example, acetoacetate modified polyvinyl alcohols, the backbone hydroxyl groups are reacted with 2,2,6-trimethyl-4H-1,3-dioxin-4-one, diketene, or *tert*-butyl acetoacetate.

Acetoacetate modified resins based on copolymer example 3 were prepared, according to the formulations in Table 9 below. The modified resin was dissolved in DMF or DMSO at elevated temperatures, and then *tert*-butyl acetoacetate was added with an acid catalyst, such as acetic acid, and reacted for 3 hours. The resin was isolated according to methods known in the art of polyvinyl alcohol purification, and dried.

**Table 9.** Preparation of acetoacetate modified resins via an acid catalyzed reaction

| Expt. No. | Ex 3 | (table 1) acetoacetate grams | % Yield |
|---|---|---|---|
| **24** | 50 | 2 | 100% |
| **25** | 50 | 5 | 100% |
| **26** | 50 | 8 | 100% |
| **27** | 50 | 10 | 100% |
| **28** | 50 | 12 | 100% |
| **29** | 50 | 15 | 100% |
| **30** | 50 | 20 | 100% |

**Example A10. Crosslinkable formulations of acetoacetate modified resins**

The acetoacetate modified resins can then undergo a range of crosslinking reactions with amine, such as adipic dihydrazide, and Ultiloc 5003, 5002 and 5001 representing polyvinyl alcohol co-vinyl amines. What makes these types of crosslinking reactions of particular interest is that they are formaldehyde free crosslinking reactions. A further feature of these types of crosslinking reactions is that they can be carried out with blocked amines. They can then be de-blocked under certain conditions, such as loss of water, liberating the free amine which can then react with the acetoacetate functionality. The latter is particularly desired because it can increase the shelf life of the solution, preventing premature gelling or an uncontrolled reaction. Crosslinkable resins were prepared according to the formulations in Table 10. Laminates were prepared using acetoacetate functionalized copolymers 27 to 30. Laminates were prepared based on PET-Coating-Adhesive-PE, and tested as shown in Table 10.

**Table 10.** Crosslinkable formulations based on acetoacetate modified resins based on copolymer example 3

| No. | 27 Table 9 | 28 Table | Table | Table |
|---|---|---|---|---|
| Ex 3, table 1 | 9.36 | 9.06 | 8.52 | 8.52 |
| EtOH | 65.52 | 63.42 | 59.64 | 59.64 |
| $H_20$ | 18.72 | 18.12 | 17.04 | 17.04 |
| 7% aq soln Adipic dihydrazide | 9.8 | 9.4 | 14.8 | 14.8 |
| Total | 100 | 100 | 100 | 100 |
| Stability hours | 8 | 8 | 8 | 8 |
| OTR 50% RH | 6 | 6.8 | 8.1 | 9.7 |
| 24 hour Water immersion | Pass | Pass | Pass | Pass |
| Pasteurization test | Pass | Pass | Pass | Pass |

As shown in Table 10, the laminates prepared with the resins exhibited good barrier properties, viscosity stability, water resistance, and pasteurization resistance.

**Example B. Preparation of terpolymers based on vinyl acetate, isopropenyl acetate, and hydroxyethyl acrylate**

To a reaction vessel was added 27.6 g (0.276 moles) of isopropenyl acetate, 55 g (0.639 moles) of vinyl acetate and 5 g (0.043 moles) of hydroxyethyl acrylate, and the vessel was then purged with nitrogen for 30 minutes at room temperature. Then 0.209 g (1.27 x $10^{-3}$ moles) of 2,2'-azobis (2-methylpropionitrile) was added under a blanket of nitrogen and the reaction vessel was then heated to 80°C and stirring continued for 2 hours. Then 0.066 g (4 x $10^{-4}$ moles) of 2,2'-azobis(2-methylpropionitrile) was added under a blanket of nitrogen, and heating at 80°C continued with stirring for an additional 4 hours. Finally, 0.145 g (8.8 x $10^{-4}$ moles) of 2,2'-azobis(2-methylpropionitrile) was added under a blanket of nitrogen, and heating at 80°C continued with stirring for a further 2 hours. The yield at this stage of the polymerization was greater than 70% and no purification or isolation was necessary other than applying a vacuum at 50°C for 40 minutes to remove any volatiles. The acetate terpolymer can either be cooled to room temperature where a highly viscous or clear solid resin will form or used immediately for the next step. To 40.43 parts of the acetate terpolymer was added 59.26 parts of methanol and the vessel was heated at 70°C until a homogenous solution was formed, and stirring was started. Then 0.31 parts of sodium hydroxide was added portion wise over 30 minutes to the reaction vessel with stirring at 70°C until the acetate group had been fully hydrolyzed. Samples were taken periodically and analyzed by FTIR to ensure complete consumption of the acetate group to the free hydroxyl group. The final fully hydrolyzed terpolymer was then isolated in the conventional way known in the art. Residual monomers, catalyst, by-products of the initiator and low molecular weight derivatives were washed from the final product with methanol, and then acetone. The final fully hydrolyzed product was then dried in an oven to obtain terpolymer example B. The terpolymer thus prepared can be converted into a solution with alcohol and water as a co-solvent at a desired solids and viscosity for its intended application.

**Example C. Preparation of terpolymers based on vinyl acetate, isopropenyl acetate, and methyl vinyl ketone**

To a reaction vessel was added 27.6 g (0.276 moles) of isopropenyl acetate, 55 g (0.639 moles of vinyl acetate) and 4.98 g (0.071 moles0 of methyl vinyl ketone, and the vessel was then purged with nitrogen for 30 minutes at room

temperature. Then, 0.209 g (1.27 x $10^{-3}$ moles) of 2,2'-azobis (2-methylpropionitrile) was added under a blanket of nitrogen and the reaction vessel was then heated to 80°C and stirring continued for 2 hours. Then 0.066 g (4 x $10^{-4}$ moles) of 2,2'-azobis(2-methylpropionitrile) was added under a blanket of nitrogen and heating at 80°C continued with stirring for an additional 4 hours. Finally, 0.145 g (8.8 x $10^{-4}$ moles) of 2,2'-azobis(2-methylpropionitrile) was added under a blanket of nitrogen and heating at 80°C continued with stirring for a further 2 hours. The yield at this stage of the polymerization was greater than 65% and no purification or isolation was necessary other than applying a vacuum at 50°C for 40 minutes to remove any volatiles. The acetate terpolymer can either be cooled to room temperature where a highly viscous or clear solid resin will form or used immediately for the next step. To 39.88 parts of the acetate terpolymer was added 59.8 parts of methanol and the vessel was heated at 70°C until a homogenous solution was formed and stirring was started. Then 0.32 parts of sodium hydroxide was added portion wise over 30 minutes to the reaction vessel with stirring at 70°C until the acetate group had been fully hydrolyzed. Samples were taken periodically and analyzed by IR to ensure complete consumption of the acetate group to the free hydroxyl group. The final fully hydrolyzed terpolymer was then isolated in the conventional way known in the art. Residual monomers, catalyst, by-products of the initiator and low molecular weight derivatives were washed from the final product with methanol, and then acetone. The final fully hydrolyzed product was then dried in an oven to yield terpolymer example C. The terpolymer thus prepared can be converted into a solution with alcohol and water as a co-solvent at a desired solids and viscosity for its intended application.

**Example D. Barrier coating compositions comprising terpolymer examples B and C**

Barrier coating compositions were prepared using terpolymer examples B and C, to obtain examples 31 to 33. The oxygen transmission rate of the barrier coating compositions was measured as described above. The formulations and test results are shown in Table 11 below.

**Table 11**. Barrier coating compositions comprising terpolymer examples B and C

| | 31 | 32 | 33 |
|---|---|---|---|
| Terpolymer (Ex.B) | 9.22 | - | - |
| Terpolymer (Ex.C) | - | 20 | 10 |
| EtOH | 51.85 | 52.7 | 72.07 |
| $H_20$ | 38.93 | 27.3 | 13.65 |
| Cloisite | - | - | - |
| Kunipia G Modified clay | - | - | 4.28 |
| **Total** | **100** | **100** | **100** |
| Binder:Filler | - | - | 2.34:1 |
| Solids % | 9.22 | 20 | 14.28 |
| OTR 65/0% RH | 2.8 | 1.52 | 3.04 |
| OTR 50/50% RH | 4.3 | 3.56 | 2.4 |

OTR is reported as cc/$m^2$/day

The two terpolymers, based on hydroxyl ethyl acrylate (Ex B) and methyl vinyl ketone (Ex C) respectively, demonstrate that terpolymers can be converted into coating compositions with an oxygen transmission rate of less than 7 cc/$m^2$/day, and with an alcohol content greater than 50% (Table 11). The results show that terpolymers comprising vinyl acetate, isopropenyl acetate, and additional (co)polymers provide barrier coatings with good barrier performance. The presence of reactive functionality on the terpolymer back bone, such as primary hydroxyl groups or carbonyl functionality, provides further scope for cross linking reactions via intermolecular or intramolecular reactions.

**Example E. Comparison of barrier coating compositions comprising copolymer example 3 in an EtOH solution and a commercially available coating composition**

To further extend the scope of the invention, Example 3 (Table 1) was prepared and converted into a coating solution in 75% ethanol as the main diluent. To this was added a cloisite dispersion, providing an over-all alcohol content of 60.24% in the final formulation (example 35). Comparative Example 34 based on a commercial polyvinyl alcohol, and Example number 35 (Ex. 3 Table 1) were evaluated on a commercial Windmoller & Holscher Soloflex (6 color common impression) flexographic press. The formulations are shown in Table 12 below.

**Table 12**. Barrier coating compositions run on a commercial Windmoller & Holscher (6 color common impression) Soloflex flexographic press

| | 34 Comparative Example | 35 (Ex. 3 table 1) |
|---|---|---|
| Copolymer (Ex. 3 table 1) | - | 4.07 |
| Sokalan CP13S | - | 1.29 |
| DI $H_20$ | - | 32.50 |
| EtOH | - | 60.24 |
| Cloisite | - | 1.9 |
| **Total** | **100** | **100** |
| Solids | 6.1 | 7.26 |
| Binder:Filler | 2.28:1 | 2.82:1 |
| Total alcohol content | 30 | 60.24 |

The barrier coating compositions, comparative example 34 and inventive example 35 were printed on a PET substrate on a Windmoller & Holscher (6 color common impression) Soloflex flexographic press, at increasing speed. Drying performance (i.e. speed of drying) was assessed as described above. The drying performance of the barrier coating compositions was tested when no additional ink was printed inline, and again when an ink was printed inline with the barrier coating composition. The barrier performance of the new copolymers was evaluated. Oxygen transmission rates of less than 6 cc/m$^2$/day are preferred, and less than 2 cc/m$^2$/day is more preferred at 65/0% and 50/50% RH with a dry film thickness of <0.3 $\mu$m. Adhesion of the coatings to the PET substrate was tested as described above. Laminate structures of PET-coating-adhesive-PE were prepared, and the OTR of the laminates was tested. The test results are shown in Table 13 below.

**Table 13.** Performance of example 35 and comparative example 34

| | **Ex. 34 (comparative)** | **Ex. 35** |
|---|---|---|
| **% alcohol content** | 30 | 60.24 |
| **Temp. °C** | 43-46 | 43-46 |
| **Press speed no ink (m/min)** | 80 | 160 |
| **%adhesion of off-press printed film** | > 95 | > 95 |
| **Unit Solimax** | 5 | 5 |
| **Press speed with Solimax (m/min)** | 25 | 130-140 |
| **%adhesion off-printed film after 5 minutes** | > 95 | > 95 |
| **Dryl film thickness ($\mu$m)** | 0.197 | 0.259 |
| **OTR 50/50% RH (PET:PE laminate)** | <2 | < 2 |
| **OTR 65/0% RH (PET:PE laminate)** | 1.2 | 0.9 |

The results in Table 13 show that barrier coating composition example 35 dries at a press speed of 160 m/min, confirming that the additional alcohol present in the copolymer based on vinyl alcohol and isopropenyl alcohol significantly improves drying performance when no ink is printed in-line, and the press is able to run at its maximum speed of 160 m/min. The barrier coating comprising the commercial polyvinyl alcohol (comparative example 34) could only be run at a maximum speed of 80 m/min to achieve adequate drying of the barrier coating. Once an ink was applied in-line, the comparative example 34 was not able to run efficiently, and the speed of the press was reduced to 25 m/min. Conversely, example 35 was still able to run at 130 to 140 m/min when an ink was applied in-line. Given the limited drying capacity on the Windmoller & Holscher (6 color common impression) Soloflex flexographic press, the results are very impressive. Furthermore, changing the unit from where the ink is applied in-line from unit 5 to unit 3 still allows in-line printing with

example 35, even though the distance between units is shortened and drying becomes more critical (data not shown).

Table 13 results confirm that composition Example 35 run on a commercial press shows improved drying performance in terms of press speed and in-line printability of a Solimax ink (Solimax is a registered trade name for nitrocellulose based solvent based gravure inks supplied by Sun Chemical Inc.). The additional alcohol content in the composition did not affect the final print quality. Printed films gave excellent adhesion on the PET substrate. Laminate structures based on PET-Coating-Adhesive-PE gave good barrier performance.

The results indicate that when the coatings are printed in-line with nitrocellulose based (NC) ink (overprinted), the copolymers based on isopropenyl alcohol and vinyl alcohol with a high alcohol content are drying over 5 times as fast as Comparative Example 34 (25 m/min for Example 34 vs. 140 m/min for Example 35 (Table 13).

**Example F. Retained solvent in barrier coating compositions example 35 and comparative example 34**

Comparative Example 34 and Example 35 were analyzed for retained solvent using Headspace Gas Chromatography (HS-GC). The results are shown in Table 14 (expressed as mg/m$^2$).

**Table 14.** Retained solvent in example 28 and comparative example 27

| | Blank Film | Unprinted | Comparativ e Example 27 PET Film | Example 28 |
|---|---|---|---|---|
| Methanol (mg/m$^2$) | 0.0 | 0.0 | 0.0 | 0.0 |
| Ethanol (mg/m$^2$) | 0.0 | 0.1 | 0.3 | 1.3 |
| n-Propanol (mg/m$^2$) | 0.0 | 0.0 | 0.1 | 0.0 |
| Ethyl acetate (mg/m$^2$) | 0.0 | 0.2 | 0.1 | 0.1 |
| Ethoxypropanol (mg/m$^2$) | 0.0 | 0.0 | 0.0 | 0.0 |
| Total (mg/m$^2$) | 0.0 | 0.3 | 0.5 | 1.4 |

The results in Table 14 show that retained solvents are well below the specific migration limits (typically a total of < 10 mg/m$^2$ for food packaging applications), and that the increased alcohol is efficiently removed under the drying conditions of the press.

**Example G. Barrier films prepared solely from copolymer example 3**

Films based on copolymer example 3 (see Table 1) were prepared, based solely on the modified resin (i.e. copolymer example 3), with a film thickness of 9 μm and 130 μm. Samples of the films with an area of 2 cm$^2$ were than taken and placed in 8 cc of cold water. Films were evaluated to see how fast they dissolved with agitation, and without agitation, to confirm that they were suitable in applications requiring water soluble films with barrier properties. The results are shown in Table 15.

**Table 15.** Water solubility of dry barrier films prepared from copolymer example 3

| Ex 3 Dry film Thickness (μm) | Time taken to disslove in 8 cc of cold $H_20$ (seconds*) | |
|---|---|---|
| | Agitation | Static |
| 9 | <60 | 120 |
| 130 | <180 | <480 |
| *time taken to dissolve represents 100% dissolution | | |

The results in Table 15 indicate that the modified resin, while showing good alcohol solubility of up to 80%, also retains the properties of polyvinyl alcohol. Barrier films based on the modified resin showed good water solubility, and dissolved readily with and without agitation.

## Claims

1. A solution comprising a copolymer and a solvent mixture, wherein the solvent mixture comprises water and 50 wt%

to 95 wt% lower alcohols, wherein a lower alcohol is either isopropanol, ethanol, n-propanol, or butanol, wherein the solids content is 3 wt% to 40 wt%, and wherein the copolymer comprises:

a) vinyl acetate; and
b) isopropenyl acetate;

wherein the copolymer is greater than 90 mol% hydrolyzed, preferably greater than 95 mol% hydrolyzed, more preferably greater than 99 mol% hydrolyzed, wherein the degree of hydrolysis is measured according to the method described in the description; and wherein the molar ratio of isopropenyl alcohol in the copolymer is 10 mol% to 50 mol%.

**2.** The solution of claim 1, wherein the molar ratio of isopropenyl alcohol in the copolymer is 15 mol% to 34 mol%.

**3.** The solution of claim 1 or claim 2, wherein the amount of lower alcohol in the solvent mixture is 60 wt% to 80 wt%, preferably 65 wt% to 75 wt%.

**4.** The solution of any one of claims 1 to 3 wherein the copolymer is a terpolymer, further comprising one or more additional polymerizable monomers in an amount of 1 wt% to 25 wt%, e.g. 1.5 wt% to 10 wt%, based on the total weight of the copolymer, preferably wherein the one or more additional polymerizable monomers is selected from the group consisting of ethylene, propene, 1-butene, isobutylene, 1,3-butadiene, styrene, $\alpha$-methylstyrene, vinyl chloride, acrylonitrile, maleic anhydride, methyl acrylate, methyl methacrylate, N-vinyl-N-methylformamide, vinyl acetamide, N-vinyl formamide, N-(hydroxymethyl)-N-vinylformamide hydroxyethyl acrylate, methylvinyl ketone and diacetone acrylamide and mixtures thereof.

**5.** The solution of any one of claims 1 to 4, wherein the solids content is 6 wt% to 30 wt%.

**6.** The solution of claim 5, having a viscosity of 3 mPas seconds to 5 mPas seconds, when measured as a 4 wt% solution, in an aqueous solution comprising 50 wt% to 95 wt% alcohol, preferably 60 wt% to 80 wt% alcohol, at 20°C; wherein viscosity is measured according to method described in the description.

**7.** The solution of claim 5 or claim 6, having a viscosity of 3.2 mPas seconds to 3.8 mPas seconds; wherein viscosity is measured according to method described in the description.

**8.** A barrier coating composition comprising one or more solutions of any one of claims 1 to 4, preferably wherein the copolymer is present in an amount of 2 wt% to 15 wt%, e.g. 3 wt% to 10 wt%, based on the total weight of the barrier coating composition.

**9.** The barrier coating composition of claim 8, further comprising one or more dispersions of exfoliated nano clays in an amount of 1 wt% to 5 wt%, based on the total weight of the barrier coating composition, preferably wherein the clay has been surface treated such that it is dispersible in organic solvent.

**10.** The barrier coating composition of claim 8 or claim 9, further comprising one or more crosslinking agents in an amount of 0.1 wt% to 15 wt%, based on the total weight of the barrier coating composition, preferably wherein the one or more crosslinking agents are selected from the group consisting of melamine formaldehydes, urea formaldehydes, glyoxals, glutaraldehyde, tetramethyl orthosilicate, methyltriethoxysilane, allyltrimethoxysilane, [3-(diethylamino)propyl]trimethoxysilane, isobutyl(trimethoxy)silane, N-propyltriethoxysilane, tetrapropyl orthosilicate, triethoxy(octyl)silane, triethoxyphenylsilane, triethoxyvinylsilane, trimethoxymethylsilane, trimethoxyphenylsilane, and mixtures thereof.

**11.** The barrier coating composition of any one of claims 8 to 10, further comprising one or more additives in an amount of 0.1 wt% to 10 wt%, based on the total weight of the barrier coating composition, preferably wherein the one or more additives are selected from polymers, adhesion promoters, dispersants, surfactants, colorants, rheology modifiers, wetting agents, stabilizers, silicones, waxes, plasticizers, defoamers, catalysts, fillers, light stabilizers, UV stabilizers, flow promoters, anti-oxidants, and de-gassing additives.

**12.** The barrier coating composition of any one of claims 8 to 11 having an OTR of < 7 cc/$m^2$/day at 23°C and 50% RH, when applied at a dry film thickness of < 0.5 $\mu$m; wherein OTR is measured according to method described in the description.

**Patentansprüche**

1. Lösung, umfassend ein Copolymer und ein Lösungsmittelgemisch, wobei das Lösungsmittelgemisch Wasser und 50 Gew.-% bis 95 Gew.-% Niederalkohole umfasst, wobei ein Niederalkohol eines von Isopropanol, Ethanol, n-Propanol oder Butanol ist, wobei der Feststoffgehalt 3 Gew.-% bis 40 Gew.-% beträgt und wobei das Copolymer umfasst:

   a) Vinylacetat; und
   b) Isopropenylacetat;

   wobei das Copolymer mehr als 90 mol-% hydrolysiert ist, vorzugsweise mehr als 95 mol-% hydrolysiert, bevorzugter mehr als 99 mol-% hydrolysiert, wobei der Hydrolysegrad gemäß dem in der Beschreibung beschriebenen Verfahren gemessen wird; und wobei der Molanteil von Isopropenylalkohol in dem Copolymer 10 mol-% bis 50 mol-% beträgt.

2. Lösung gemäß Anspruch 1, wobei der Molanteil von Isopropenylalkohol in dem Copolymer 15 mol-% bis 34 mol-% beträgt.

3. Lösung gemäß Anspruch 1 oder Anspruch 2, wobei die Menge an Niederalkohol in dem Lösungsmittelgemisch 60 Gew.-% bis 80 Gew.-%, vorzugsweise 65 Gew.-% bis 75 Gew.-%, beträgt.

4. Lösung gemäß einem der Ansprüche 1 bis 3, wobei das Copolymer ein Terpolymer ist, ferner umfassend ein oder mehrere zusätzliche polymerisierbare Monomere in einer Menge von 1 Gew.-% bis 25 Gew.-%, z.B. 1,5 Gew.-% bis 10 Gew.-%, bezogen auf das Gesamtgewicht des Copolymers, wobei das eine oder die mehreren zusätzlichen polymerisierbare(n) Monomer(e) vorzugsweise ausgewählt ist/sind aus der Gruppe bestehend aus Ethylen, Propen, 1-Buten, Isobutylen, 1,3-Butadien, Styrol, α-Methylstyrol, Vinylchlorid, Acrylnitril, Maleinsäureanhydrid, Methylacrylat, Methylmethacrylat, N-Vinyl-N-methylformamid, Vinylacetamid, N-Vinylformamid, N-(Hydroxymethyl)-N-vinylformamid, Hydroxyethylacrylat, Methylvinylketon und Diacetonacrylamid und Gemischen davon.

5. Lösung gemäß einem der Ansprüche 1 bis 4, wobei der Feststoffgehalt 6 Gew.-% bis 30 Gew.-% beträgt.

6. Lösung gemäß Anspruch 5 mit einer Viskosität von 3 mPas Sekunden bis 5 mPas Sekunden, wenn gemessen als eine 4 Gew.-%-Lösung in einer wässrigen Lösung, die 50 Gew.-% bis 95 Gew.-% Alkohol, vorzugsweise 60 Gew.-% bis 80 Gew.-% Alkohol, umfasst, bei 20 °C; wobei die Viskosität gemäß dem in der Beschreibung beschriebenen Verfahren gemessen wird.

7. Lösung gemäß Anspruch 5 oder Anspruch 6 mit einer Viskosität von 3,2 mPas Sekunden bis 3,8 mPas Sekunden; wobei die Viskosität gemäß dem in der Beschreibung beschriebenen Verfahren gemessen wird.

8. Sperrschichtzusammensetzung, umfassend eine oder mehrere Lösungen gemäß einem der Ansprüche 1 bis 4, wobei das Copolymer vorzugsweise in einer Menge von 2 Gew.-% bis 15 Gew.-%, z.B. 3 Gew.-% bis 10 Gew.-%, bezogen auf das Gesamtgewicht der Sperrschichtzusammensetzung, vorhanden ist.

9. Sperrschichtzusammensetzung gemäß Anspruch 8, ferner umfassend eine oder mehrere Dispersionen von exfolierten Nanotonen in einer Menge von 1 Gew.-% bis 5 Gew.-%, bezogen auf das Gesamtgewicht der Sperrschichtzusammensetzung, wobei der Ton vorzugsweise oberflächenbehandelt worden ist, so dass er in organischem Lösungsmittel dispergierbar ist.

10. Sperrschichtzusammensetzung gemäß Anspruch 8 oder Anspruch 9, ferner umfassend ein oder mehrere Vernetzungsmittel in einer Menge von 0,1 Gew.-% bis 15 Gew.-%, bezogen auf das Gesamtgewicht der Sperrschichtzusammensetzung, wobei das eine oder die mehreren Vernetzungsmittel vorzugsweise ausgewählt ist/sind aus der Gruppe bestehend aus Melaminformaldehyden, Harnstoffformaldehyden, Glyoxalen, Glutaraldehyd, Tetramethylorthosilicat, Methyltriethoxysilan, Allyltrimethoxysilan, [3-(Diethylamino)propyl]trimethoxysilan, Isobutyl(trimethoxy)silan, N-Propyltriethoxysilan, Tetrapropylorthosilicat, Triethoxy(octyl)silan, Triethoxyphenylsilan, Triethoxyvinylsilan, Trimethoxymethylsilan, Trimethoxyphenylsilan und Gemischen davon.

11. Sperrschichtzusammensetzung gemäß einem der Ansprüche 8 bis 10, ferner umfassend einen oder mehrere Zusatzstoffe in einer Menge von 0,1 Gew.-% bis 10 Gew.-%, bezogen auf das Gesamtgewicht der Sperrschichtzusammensetzung, wobei der eine oder die mehreren Zusatzstoffe vorzugsweise ausgewählt ist/sind aus Polymeren,

Haftförderern, Dispergiermitteln, Tensiden, Farbmitteln, Rheologiemodifikatoren, Netzmitteln, Stabilisatoren, Siliconen, Wachsen, Weichmachern, Entschäumern, Katalysatoren, Füllstoffen, Lichtstabilisatoren, UV-Stabilisatoren, Fließförderern, Antioxidationsmitteln und Entgasungszusatzstoffen.

**12.** Sperrschichtzusammensetzung gemäß einem der Ansprüche 8 bis 11 mit einer OTR von < 7 cc/m$^2$/Tag bei 23 °C und 50 % RH, wenn in einer Trockenfilmdicke von < 0,5 $\mu$m aufgebracht; wobei die OTR gemäß dem in der Beschreibung beschriebenen Verfahren gemessen wird.

## Revendications

**1.** Solution comprenant un copolymère et un mélange de solvants, le mélange de solvants comprenant de l'eau et 50 % en poids à 95 % en poids d'alcools inférieurs, un alcool inférieur étant soit l'isopropanol, l'éthanol, le n-propanol, soit le butanol, la teneur en matières solides étant de 3 % en poids à 40 % en poids, et le copolymère comprenant :

a) de l'acétate de vinyle ; et
b) de l'acétate d'isopropényle ;

le copolymère étant hydrolysé à raison de plus de 90 % en moles, préférablement hydrolysé à raison de plus de 95 % en moles, plus préférablement hydrolysé à raison de plus de 99 % en moles, le degré d'hydrolyse étant mesuré selon le procédé décrit dans la description ; et
le rapport molaire d'alcool isopropénylique dans le copolymère étant de 10 % en moles à 50 % en moles.

**2.** Solution selon la revendication 1, le rapport molaire d'alcool isopropénylique dans le copolymère étant de 15 % en moles à 34 % en moles.

**3.** Solution selon la revendication 1 ou la revendication 2, la quantité d'alcool inférieur dans le mélange de solvants étant de 60 % en poids à 80 % en poids, préférablement de 65 % en poids à 75 % en poids.

**4.** Solution selon l'une quelconque des revendications 1 à 3, le copolymère étant un terpolymère, comprenant en outre un ou plusieurs monomères polymérisables supplémentaires en une quantité de 1 % en poids à 25 % en poids, par ex. de 1,5 % en poids à 10 % en poids, sur la base du poids total du copolymère, préférablement le ou les monomères polymérisables supplémentaires étant choisis dans le groupe constitué par l'éthylène, le propène, le 1-butène, l'isobutylène, le 1,3-butadiène, le styrène, l'$\alpha$-méthylstyrène, le chlorure de vinyle, l'acrylonitrile, l'anhydride maléique, l'acrylate de méthyle, le méthacrylate de méthyle, le N-vinyl-N-méthylformamide, le vinylacétamide, le N-vinylformamide, le N-(hydroxyméthyl)-N-vinylformamide, l'acrylate d'hydroxyéthyle, la méthylvinylcétone et le diacétone acrylamide et des mélanges correspondants.

**5.** Solution selon l'une quelconque des revendications 1 à 4, la teneur en matières solides étant de 6 % en poids à 30 % en poids.

**6.** Solution selon la revendication 5, possédant une viscosité de 3 mPas secondes à 5 mPas secondes, lorsqu'elle est mesurée en tant qu'une solution à 4 % en poids, dans une solution aqueuse comprenant 50 % en poids à 95 % en poids d'alcool, préférablement 60 % en poids à 80 % en poids d'alcool, à 20 °C ; la viscosité étant mesurée selon le procédé décrit dans la description.

**7.** Solution selon la revendication 5 ou la revendication 6, possédant une viscosité de 3,2 mPas secondes à 3,8 mPas secondes ; la viscosité étant mesurée selon le procédé décrit dans la description.

**8.** Composition de revêtement barrière comprenant une ou plusieurs solutions selon l'une quelconque des revendications 1 à 4, préférablement le copolymère étant présent en une quantité de 2 % en poids à 15 % en poids, par ex. de 3 % en poids à 10 % en poids, sur la base du poids total de la composition de revêtement barrière.

**9.** Composition de revêtement barrière selon la revendication 8, comprenant en outre une ou plusieurs dispersions de nanoargiles exfoliées en une quantité de 1 % en poids à 5 % en poids, sur la base du poids total de la composition de revêtement barrière, préférablement l'argile ayant été traitée en surface de sorte qu'elle soit dispersible dans un solvant organique.

**10.** Composition de revêtement barrière selon la revendication 8 ou la revendication 9, comprenant en outre un ou plusieurs agents de réticulation en une quantité de 0,1 % en poids à 15 % en poids, sur la base du poids total de la composition de revêtement barrière, préférablement l'agent ou les agents de réticulation étant choisis dans le groupe constitué par des mélamine formaldéhydes, des urée formaldéhydes, des glyoxals, le glutaraldéhyde, l'orthosilicate de tétraméthyle, le méthyltriéthoxysilane, l'allyltriméthoxysilane, le [3-(diéthylamino)propyl]triméthoxysilane, l'isobutyl(triméthoxy)silane, le N-propyltriéthoxysilane, l'orthosilicate de tétrapropyle, le triéthoxy(octyl)silane, le triéthoxyphénylsilane, le triéthoxyvinylsilane, le triméthoxyméthylsilane, le triméthoxyphénylsilane, et des mélanges correspondants.

**11.** Composition de revêtement barrière selon l'une quelconque des revendications 8 à 10, comprenant en outre un ou plusieurs additifs en une quantité de 0,1 % en poids à 10 % en poids, sur la base du poids total de la composition de revêtement barrière, préférablement l'additif ou les additifs étant choisis parmi des polymères, des agents favorisant l'adhérence, des dispersants, des tensioactifs, des matières colorantes, des modificateurs de rhéologie, des agents mouillants, des stabilisants, des silicones, des cires, des plastifiants, des antimousses, des catalyseurs, des charges, des photostabilisants, des stabilisants UV, des agents favorisant l'écoulement, des antioxydants, et des additifs de dégazage.

**12.** Composition de revêtement barrière selon l'une quelconque des revendications 8 à 11 possédant un OTR de < 7 $cm^3/m^2$/jour à 23 °C et 50 % de RH, lorsqu'elle est appliquée à raison d'une épaisseur de film sec de < 0,5 $\mu$m ; l'OTR étant mesuré selon le procédé décrit dans la description.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6096393 A
- JP 19970266840 B
- US 3053790 A
- US 4125694 A
- WO 7900488 A
- DE 3724332
- JP H10152527 B


### Non-patent literature cited in the description


- **NISHINO, J. et al.** *Polymer Science Part A: Polymer Chemistry,* 2008, vol. 47, 754-761